# EUROPEAN PATENT SPECIFICATION

(11) **EP 2 985 690 B1**
(45) Date of publication and mention of the grant of the patent: **18.07.2018**
(21) Application number: 15170243.8
(22) Date of filing: 02.06.2015
(51) Int. Cl.: G06F 3/06

(54) **METHOD AND APPARATUS FOR SEQUENTIAL STREAM I/O PROCESSING**
VERFAHREN UND VORRICHTUNG ZUR SEQUENTIELLEN STROM-I/O-VERARBEITUNG
PROCÉDÉ ET APPAREIL POUR LE TRAITEMENT D'UN FLUX SEQUENTIEL D'E/S

(30) Priority: 11.08.2014 US 201414456328
(43) Date of publication of application: 17.02.2016
(73) Proprietor: Dot Hill Systems Corporation, Longmont CO 80501 (US)
(72) Inventor: TRAUT, Zachary David, Denver, CO 80212 (US); BARRELL, Michael David, Superior, CO 80027 (US)
(74) Representative: Beck Greener

(56) References cited:
- US-A1- 2006 288 184
- US-A1- 2014 250 268

## Description

### FIELD

The present invention is directed to computer data storage. In particular, the present invention is directed to methods and apparatuses for efficient storage controller memory usage for sequential I/O streams.

### BACKGROUND

The need to store digital files, documents, pictures, images and other data continues to increase rapidly. In connection with the electronic storage of data, systems incorporating one or more data storage controllers have been devised. Storage controllers receive data read and write requests from host computers and control one or more physical storage devices to beneficially store or provide the requested data from/to the host computers.

Storage controllers generally buffer read and write data requests, often converting the host data read and write requests into RAID or storage device read or write requests. Many storage controllers store read and write data in cache memories included as part of the storage controllers. Cache memories are small compared to external storage devices such as hard drives, and generally orders of magnitude faster. However, cache memory costs significantly more per byte than storage devices, and therefore cache memory size is correspondingly small in order to be cost effective. The need is always present for cache memories to operate as efficiently as possible in order for overall storage controller performance to be maximized to all interconnected host computers.

Host computers interact with data storage systems by providing either random or sequential I/O requests. In the case of sequential I/O requests, it is desirable for storage controllers to handle as many different sequential I/O streams as possible in order to maximize performance. Sequential I/O streams include a series of generally consecutive I/O requests directed to the same storage device, logical volume, or VDisk. While some sequential I/O streams may be read requests, other sequential I/O streams may be write requests.

Document US 2006/0288184 A1 discloses a method for processing sequential stream requests in a data storage system.

### SUMMARY

The present invention is directed to solving disadvantages of the prior art. In accordance with embodiments of the present invention, a method according to claim 1 is provided.

In accordance with another embodiment of the present invention, a storage controller according to claim 10 is provided.

In accordance with yet another embodiment of the present invention, a system according to claim 11 is provided.

An advantage of the present invention is it provides efficient use of storage controller memory resources for sequential I/O read and write streams. All storage controllers have a fixed amount of onboard memory resources at any given time. The present invention allocates the limited memory resources to the sequential I/O streams that can benefit the most from the resources.

Another advantage of the present invention is it utilizes a limited amount of historical data to manage ongoing sequential I/O streams. Therefore, little memory space is allocated to stream tracking metadata, which means more space is available for other uses, including storing read and write cache data.

Additional features and advantages of embodiments of the present invention will become more readily apparent from the following description, particularly when taken together with the accompanying drawings.

### BRIEF DESCRIPTION OF THE DRAWINGS

FIGURE 1a is a block diagram illustrating components of a first non host-based data storage system in accordance with embodiments of the present invention.
FIGURE 1b is a block diagram illustrating components of a second non host-based data storage system in accordance with embodiments of the present invention.
FIGURE 1c is a block diagram illustrating components of a third non host-based data storage system in accordance with embodiments of the present invention.
FIGURE 2a is a block diagram illustrating components of a first host-based data storage system in accordance with embodiments of the present invention.
FIGURE 2b is a block diagram illustrating components of a second host-based data storage system in accordance with embodiments of the present invention.
FIGURE 2c is a block diagram illustrating components of a third host-based data storage system in accordance with embodiments of the present invention.
FIGURE 3 is a block diagram illustrating a data storage system in accordance with embodiments of the present invention.
FIGURE 4 is a block diagram illustrating a host data stream in accordance with embodiments of the present invention.
FIGURE 5 is a diagram illustrating a first host data stream example in accordance with embodiments of the present invention.
FIGURE 6a is a diagram illustrating a second host data stream example in accordance with embodiments of the present invention.
FIGURE 6b is a diagram illustrating burst parameters in accordance with embodiments of the present invention.
FIGURE 7 is a diagram illustrating outstanding I/Os per burst in accordance with embodiments of the present invention.
FIGURE 8 is a diagram illustrating logical volume, VDisk, and storage device metadata in accordance with embodiments of the present invention.
FIGURE 9a is a block diagram illustrating active and inactive lists stored in data stream metadata memory in accordance with embodiments of the present invention.
FIGURE 9b is a block diagram illustrating stream metadata stored in active list entries in accordance with embodiments of the present invention.
FIGURE 10 is a flowchart illustrating a first embodiment of a command completion process in accordance with the present invention.

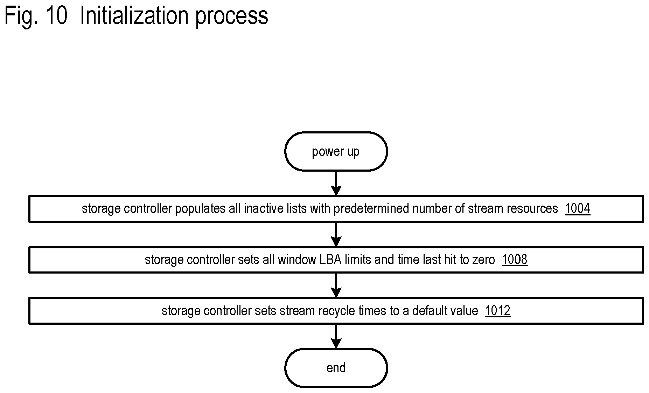

FIGURE 10 is a flowchart illustrating an initialization process in accordance with embodiments of the present invention.

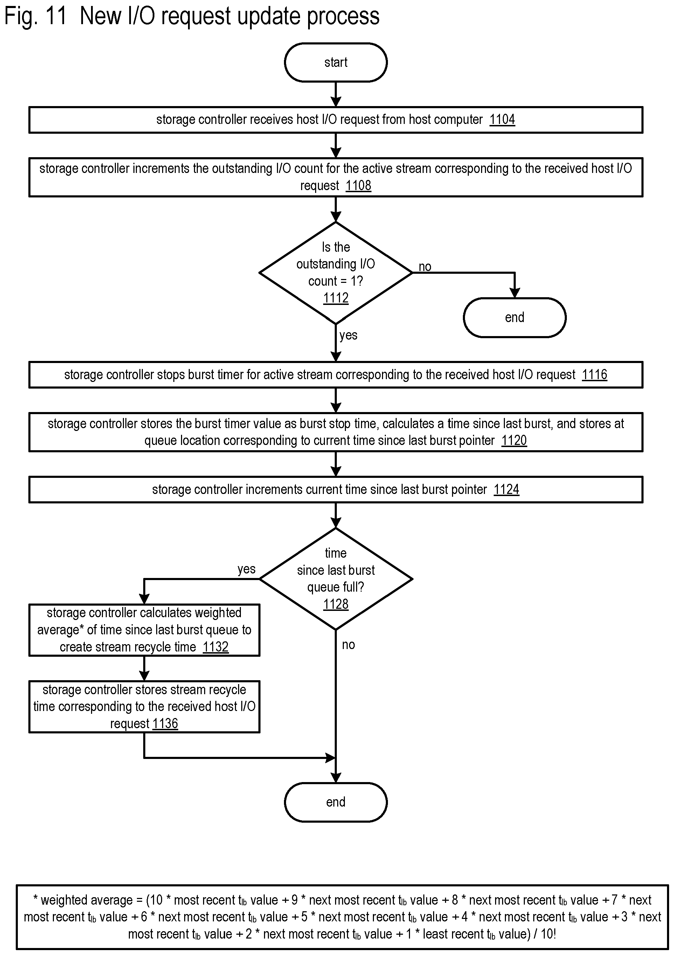

FIGURE 11 is a flowchart illustrating a new I/O request update process in accordance with embodiments of the present invention.

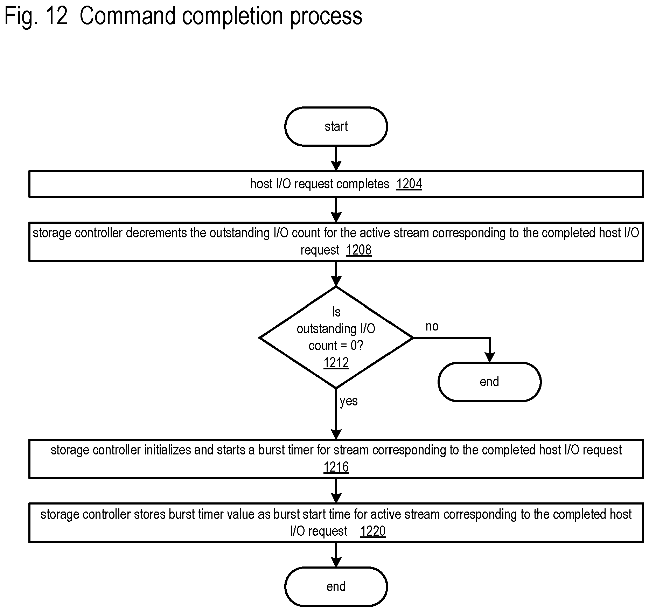

FIGURE 12 is a flowchart illustrating a command completion process in accordance with embodiments of the present invention.

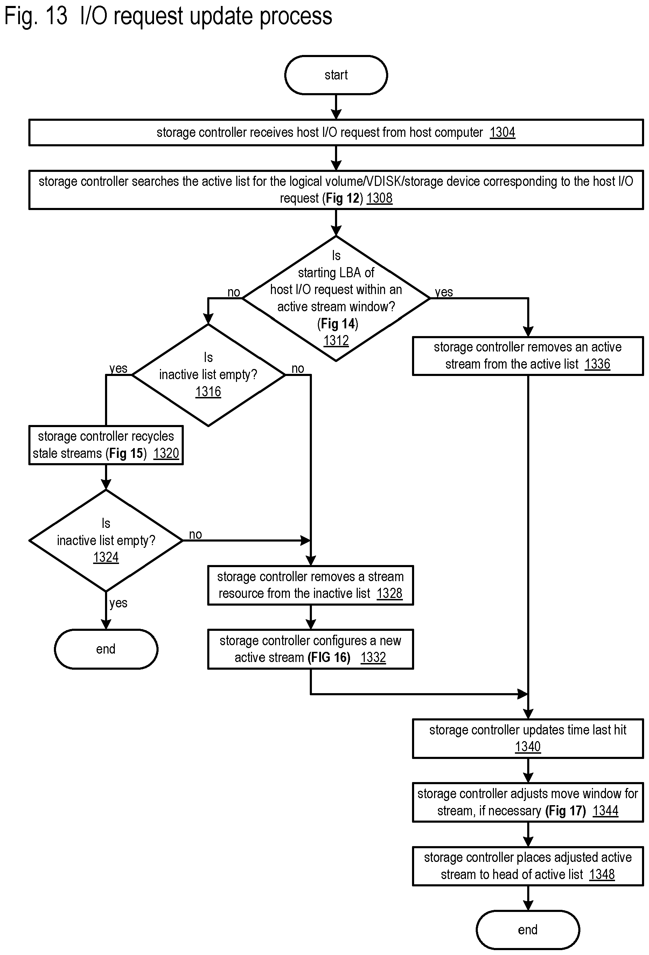

FIGURE 13 is a flowchart illustrating an I/O request update process in accordance with embodiments of the present invention.

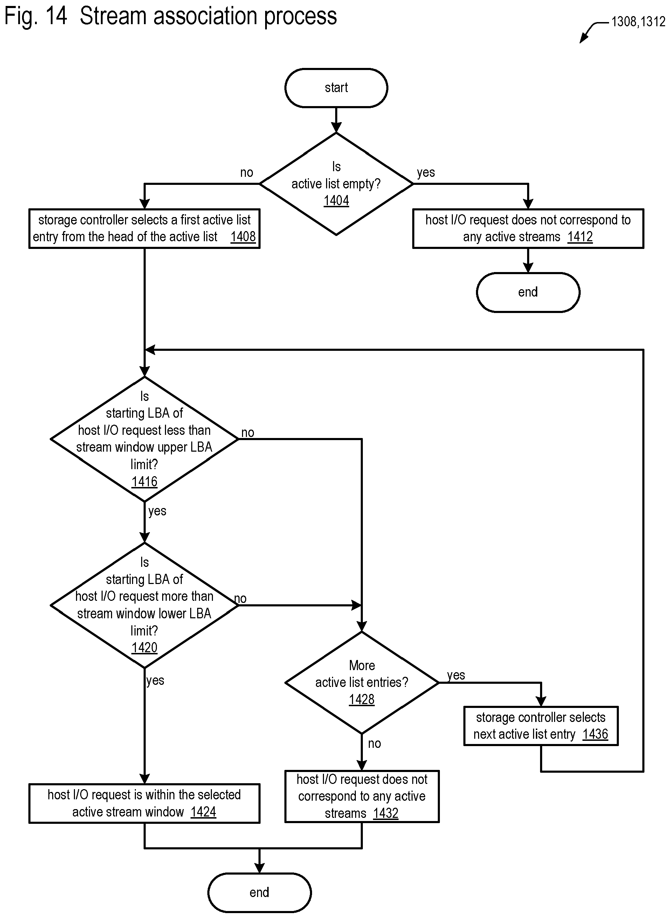

FIGURE 14 is a flowchart illustrating a stream association process in accordance with embodiments of the present invention.

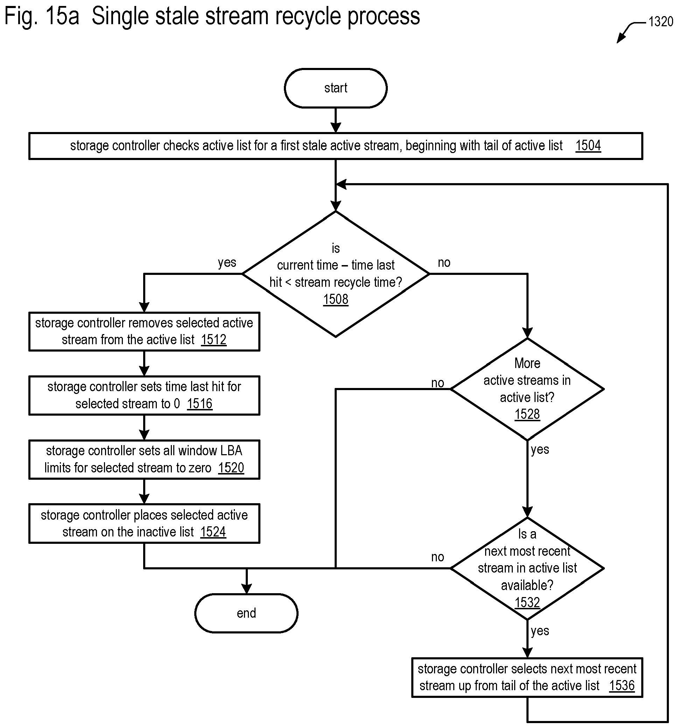

FIGURE 15a is a flowchart illustrating a single stale stream recycle process in accordance with a first embodiment of the present invention.

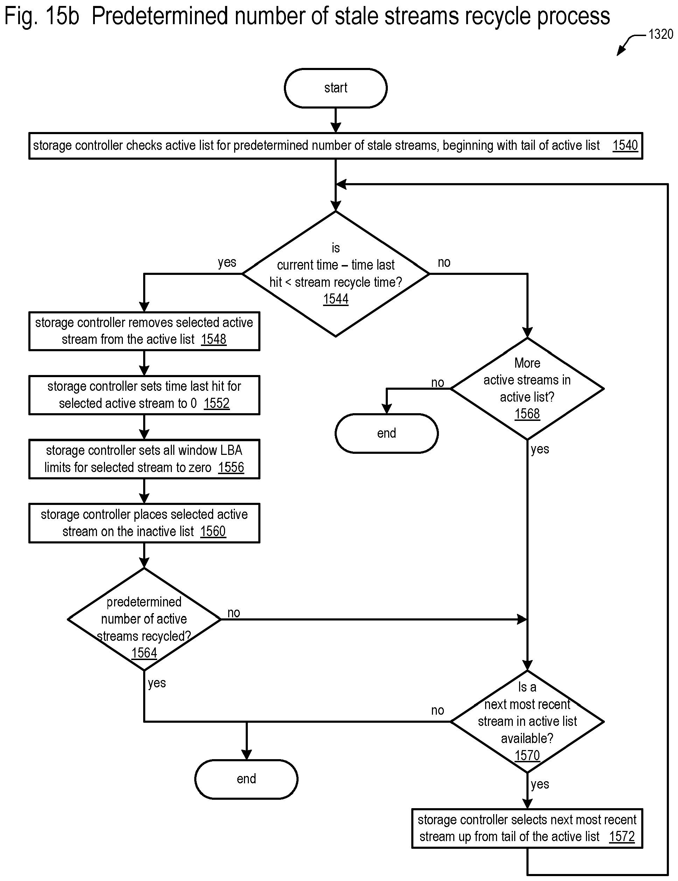

FIGURE 15b is a flowchart illustrating a predetermined number of stale streams recycle process in accordance with a second embodiment of the present invention.

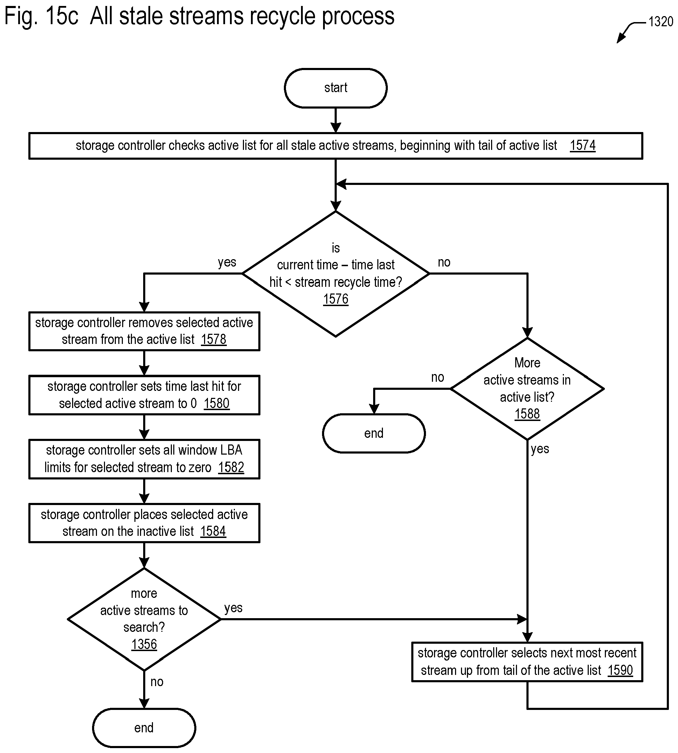

FIGURE 15c is a flowchart illustrating an all stale streams recycle process in accordance with a third embodiment of the present invention.

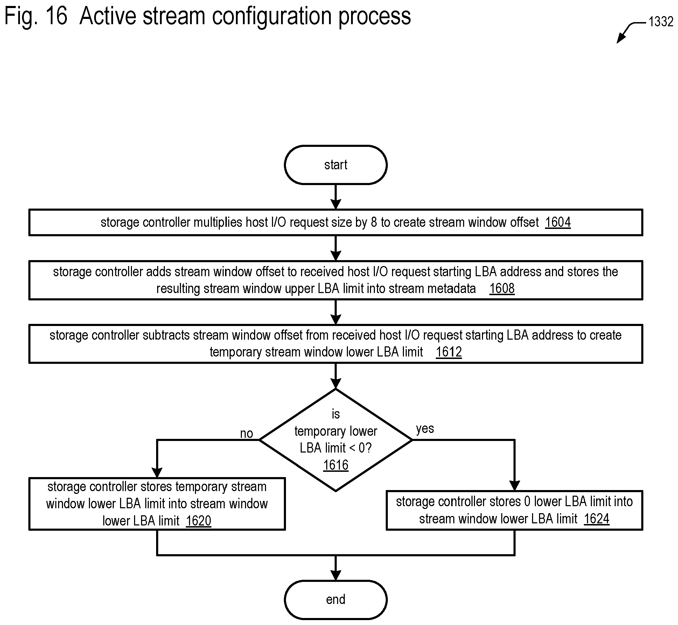

FIGURE 16 is a flowchart illustrating an active stream configuration process in accordance with embodiments of the present invention.

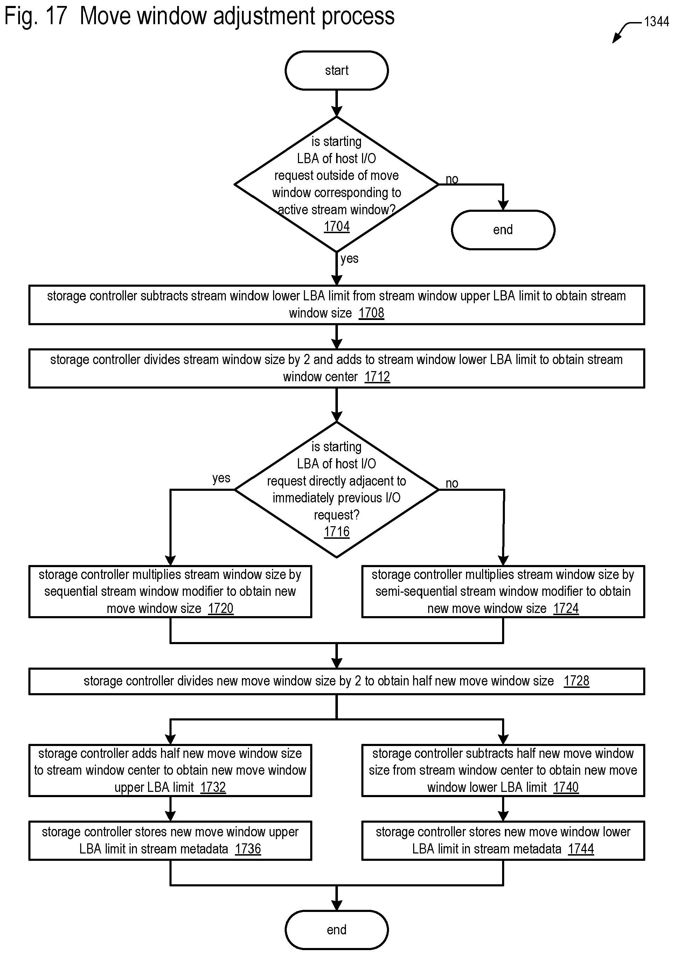

FIGURE 17 is a flowchart illustrating a move window adjustment process in accordance with embodiments of the present invention.

### DETAILED DESCRIPTION

The present invention is directed to improvements to sequential I/O resource allocation in a storage controller from host computer sequential read and write requests. Keeping in mind the desire to keep storage controller costs down by limiting the amount of onboard memory resources, it is necessary to improve sequential I/O processing efficiency and performance.

One way to improve sequential I/O performance is simply to increase the amount of storage controller memory as much as possible in order to track and provide cache memory allocation for all currently active I/O streams. However, this will usually fill the storage controller memory with either infrequently accessed or useless data that the host computer may never request or may request much later. Additionally, in systems where a storage controller is coupled to multiple host computers, filling a cache memory with large amounts of data for a specific host computer may prevent other host computers from utilizing the storage controller memory resources, severely limiting read and/or write performance to the other host computers.

Each host computer issues read and write data requests based on the applications and other programs executed by that host computer. In most cases, the applications and other programs currently being executed by one host computer is different than the applications and other programs being executed by a different host computer. Each host computer therefore issues a different set of sequential read or write requests, which are known as a host stream. A given host computer can issue multiple host streams.

While a static read cache size is generally efficient for host computers that provide a relatively constant stream of read requests, this is often not the case for host computers that issue bursts of read requests to storage controllers. A burst is a consecutive group of sequential host read requests from the same host computer. A burst of host read requests creates a high initial queue depth. If the burst of host read requests adds up to more than the static read ahead size of the read cache, the host stream will eventually catch up with read ahead and cache misses will occur with every burst, thus lowering read performance.

What is needed is a storage controller that keeps track of important statistics for all host streams, and allocates limited memory resources to the sequential I/O streams that are the most active. Inactive streams or streams that have lower or older utilization are recycled in order to provide memory resources for newer and more active streams.

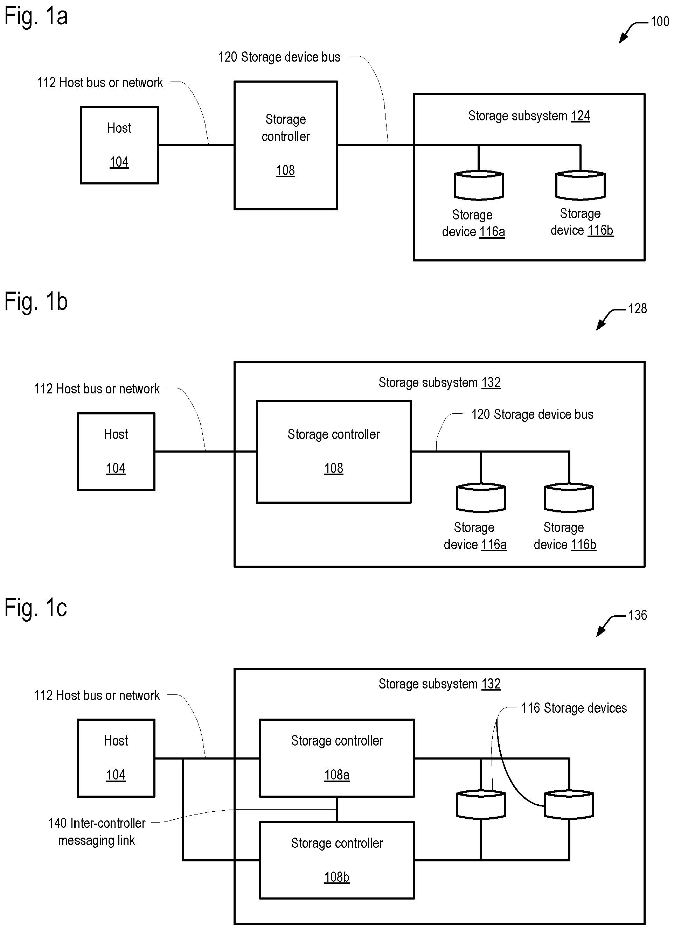

Referring now to Figure 1a, a block diagram illustrating components of a first non host-based data storage system 100 in accordance with embodiments of the present invention is shown.

The data storage system 100 includes one or more host computers 104. Host computer 104 is generally a server, but could also be a desktop or mobile computer. Host computer 104 executes application programs that generate read and write requests to storage controller 108 over host bus or network 112. Host bus or network 112 in one embodiment is a bus such as SCSI, FC-AL, USB, Firewire, SSA, SAS, SATA, or Infiniband. In another embodiment, host bus or network 112 is a network such as Ethernet, iSCSI, Fiber Channel, SSA, ESCON, ATM, FICON, NVMe, or Infiniband.

Host computer 104 interfaces with one or more storage controllers 108, although only a single storage controller 108 is illustrated for clarity. In one embodiment, storage controller 108 is a RAID controller. In another embodiment, storage controller 108 is a storage appliance such as a provisioning, virtualization, replication, or backup appliance. Storage controller 108 transfers data to and from storage devices 116a, 116b in storage subsystem 124, over storage device bus 120. Storage device bus 120 is any suitable storage bus or group of buses for transferring data directly between storage controller 108 and storage devices 116, including but not limited to SCSI, Fiber Channel, SAS, SATA, or SSA.

Storage subsystem 124 in one embodiment contains twelve storage devices 116. In other embodiments, storage subsystem 124 may contain fewer or more than twelve storage devices 116. Storage devices 116 include various types of storage devices, including hard disk drives, solid state drives, optical drives, and tape drives. Within a specific storage device type, there may be several sub-categories of storage devices 116, organized according to performance. For example, hard disk drives may be organized according to cache size, drive RPM (5,400, 7,200, 10,000, and 15,000, for example), queue depth, random transfer rate, or sequential transfer rate.

Referring now to Figure 1b, a block diagram illustrating components of a second non host-based data storage system 128 in accordance with embodiments of the present invention is shown. Non host-based data storage system 128 is similar to non host-based data storage system 100, with the exception being storage controller 108 is within storage subsystem 132, along with storage devices 116. In the embodiment illustrated in Figure 1b, storage controller 108 is a single RAID controller 108. However, in other embodiments, storage controller 108 represents multiple RAID controllers 108.

Referring now to Figure 1c, a block diagram illustrating components of a third host-based data storage system 136 in accordance with embodiments of the present invention is shown. Data storage system 136 is similar to data storage systems 100 and 128, except storage controller 108 represents two redundant storage controllers 108a, 108b. In one embodiment, storage controllers 108a, 108b utilize active-active failover in order to have continued availability to storage devices 116 by host 104 in the event of a failure of one of storage controllers 108a, 108b. Inter-controller messaging link 140 provides a communication and data path between storage controllers 108a, 108b in order to mirror write data and synchronize failover and failback operations.

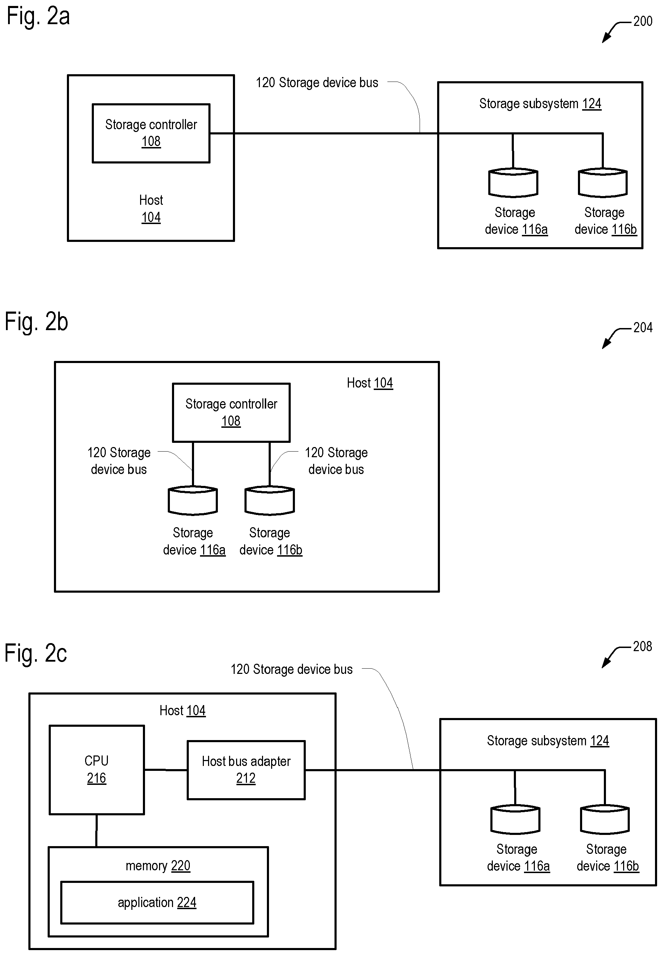

Referring now to Figure 2a, a block diagram illustrating components of a first host-based data storage system 200 in accordance with embodiments of the present invention is shown. First host-based data storage system 200 is similar to first non host-based storage system 100 of Figure 1a, except storage controller 108 is within host computer 104. Storage controller 108 interfaces through a local bus of host computer 104, where the local bus may be any suitable bus for high speed transfers between the CPU of host computer 104 and storage controller 108, including Rapid IO, PCI, PCI-X, or PCI Express. Storage controller 108 may either be integrated on the motherboard of host computer 104, or may be an add-in board or other form of assembly in host computer 104.

Referring now to Figure 2b, a block diagram illustrating components of a second host-based data storage system 204 in accordance with embodiments of the present invention is shown. Second host-based data storage system 204 integrates the functions of storage subsystem 124 into host computer 104. Data storage system 204 represents a self-contained highly integrated data storage system.

Referring now to Figure 2c, a block diagram of illustrating components of a third host-based data storage system 208 in accordance with embodiments of the present invention is shown. Third host-based data storage system 208 is similar to first host-based data storage system 200, but instead of an integrated storage controller 108, a software-based approach is used. Interface between host computer 104 and storage device bus 120 is provided by host bus adapter 212, which provides appropriate data and command buffering functions as well as protocol control and low-level error handling. CPU 216 executes applications 224 in memory 220 to control data flow between memory 220 and storage devices 116a, 116b in storage subsystem 124.

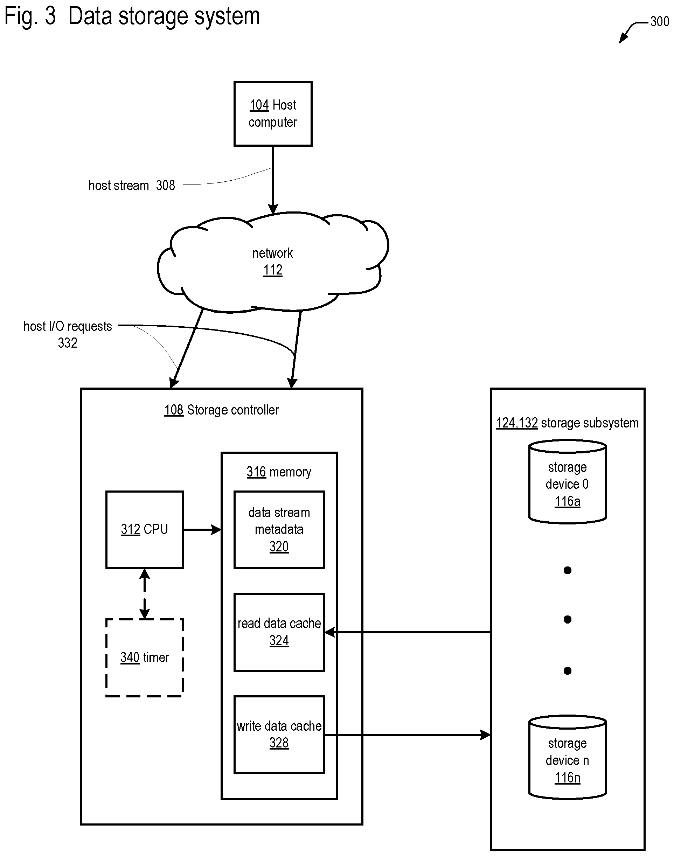

Referring now to Figure 3, a block diagram illustrating a data storage system 300 in accordance with embodiments of the present invention is shown. Data storage system 300 includes one or more host computers 104 interconnected to a storage controller 108 through bus or network 112. Host computer 104 generates a host stream 308, which are multiple groups of host I/O requests 332.

Storage controller 108 includes a CPU or processor 312, which executes program instructions stored in a memory 316 coupled to the CPU 312. CPU 312 includes any processing device suitable for executing storage controller 108 programs, such as Intel x86-compatible processors, embedded processors, mobile processors, and/or RISC processors. CPU 312 may include several devices including field-programmable gate arrays (FPGAs), memory controllers, North Bridge devices, and/or South Bridge devices.

Memory 316 may be one or more forms of volatile memory 316, non-volatile memory 316, or a combination of both volatile and non-volatile memories 316. The memory 316 includes firmware which includes program instructions that CPU 312 fetches and executes, including program instructions for the processes of the present invention. Examples of non-volatile memory 316 include, but are not limited to, flash memory, SD, EPROM, EEPROM, hard disks, and NOVRAM. Volatile memory 316 stores various data structures and user data. Examples of volatile memory 316 include, but are not limited to, SRAM, DDR RAM, DDR2 RAM, DDR3 RAM, Z-RAM, TTRAM, A-RAM, ETA RAM, and other forms of temporary memory.

Memory 316 includes a read data cache 324 and in some embodiments a write data cache 328, which provide improved read and write performance, respectively, to the host computer 104. Memory 316 also includes data stream metadata 320. Data stream metadata 320 stores parameters related to host I/O requests 332, and are used to control sequential I/O operations.

Storage controller 108 is coupled to storage subsystem 124, 132, which includes one or more storage devices 116a - 116n. Frequently accessed data is read from storage devices 116 into read data cache 324, where it can be provided in response to host read requests 332 much faster than directly from the storage devices 116. Write data is initially stored in the write data cache 328, which is much faster than writes sent directly to storage devices 116.

In some embodiments, storage controller 108 includes timers 340. Timers 340 may be hardware timers controlled by CPU 312, or it may be software routines that execute on CPU 312. Timers 340 measures the time between bursts 616, and is discussed in the following description and figures. Timers 340 may represent any number of timers, and in the present invention there is one timer 340 allocated to each active stream 912a-j corresponding to each logical volume, VDisk, or storage device 804.

It should be understood that storage controller 108 may be functionally organized in countless different functional organizations and architectures without diverting from the scope or operation of the present invention.

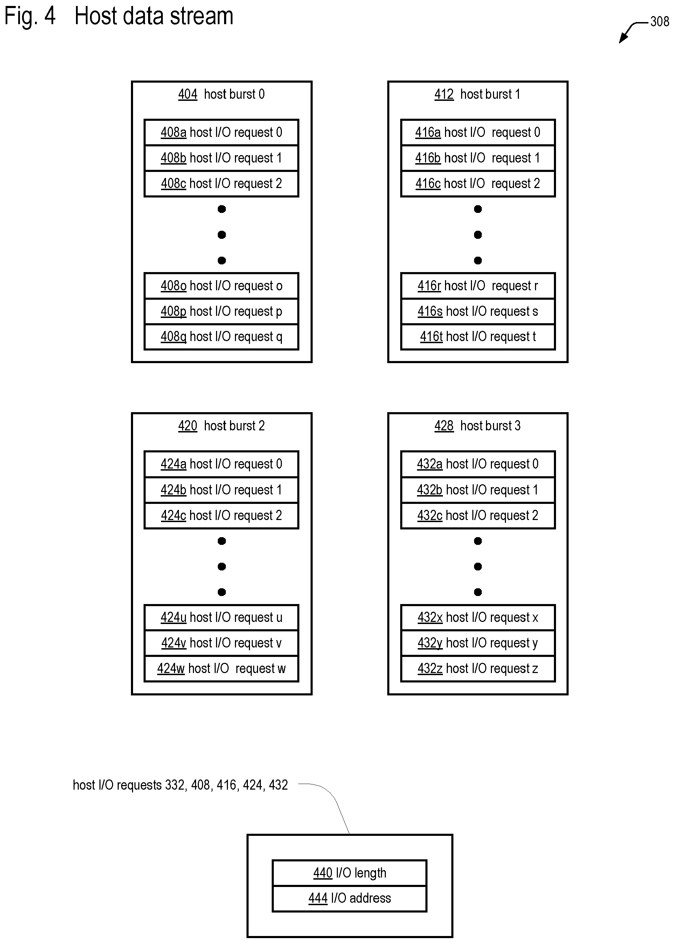

Referring now to Figure 4, a block diagram illustrating a host data stream 308 in accordance with embodiments of the present invention is shown. Host data stream 308 includes groups of consecutive host I/O requests 332, which are known as bursts or host bursts. Although host data stream 308 may include any number of bursts or host bursts, four host bursts are shown: host burst 0 404, host burst 1 412, host burst 2 420, and host burst 3 428. Each host burst 404, 412, 420, 428 may include the same or a different number of host I/O requests 332. Host burst 0 404 includes host I/O request 0 408a through host I/O request q 408q. Host burst 1 412 includes host I/O request 0 416a through host I/O request t 416t. Host burst 2 420 includes host I/O request 0 424a through host I/O request w 424w. Host burst 3 428 includes host I/O request 0 432a through host I/O request z 432z.

Each host I/O request 332, 408, 416, 424, and 432 includes an I/O length 440 and an I/O address 444. I/O length 440 is the number of blocks or bytes to be read from or written to storage devices 116, and the I/O address 444 is the starting address the host I/O request 332, 408, 416, 424, and 432 will be directed to.

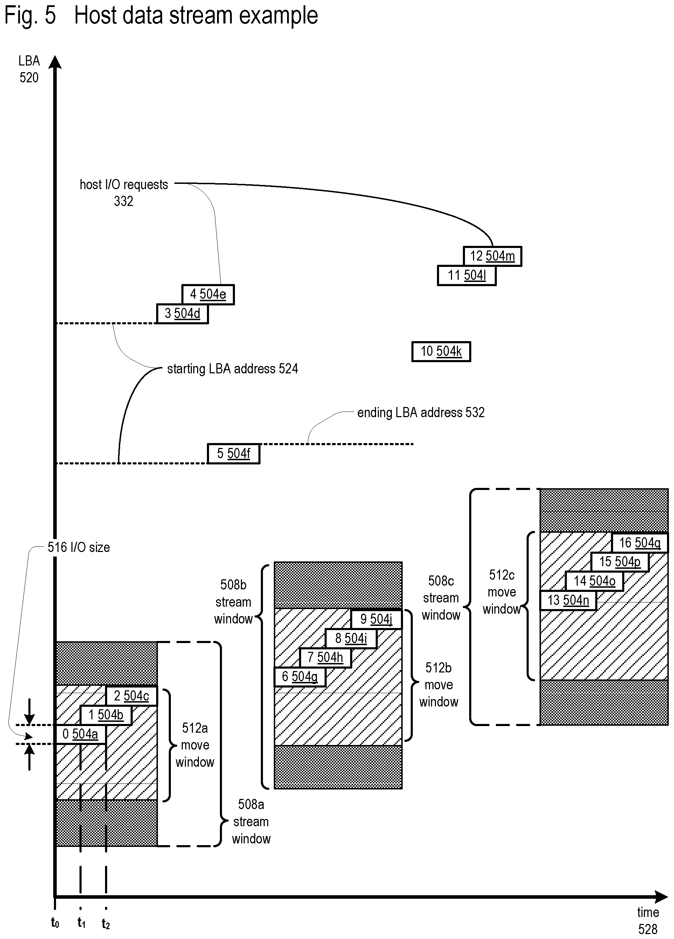

Referring now to Figure 5, a diagram illustrating a first host data stream 308a example in accordance with embodiments of the present invention is shown. Host data stream 308a includes multiple host I/O requests 332 received over time 528, where the host I/O requests 332 are individually identified as host I/O requests 504. Figure 5 illustrates a first burst of sequential host I/O requests 504a, 504b, and 504c, a second burst of sequential host I/O requests 504g, 504h, 504i, and 504j, and a third burst of sequential host I/O requests 504n, 504o, 504p, and 504q. Storage controller 108 receives other non-sequential host I/O requests during the time that the three bursts of sequential I/O requests are received, and the non-sequential host I/O requests are identified as I/O requests 504d, 504e, 504f, 504k, 5041, and 504m.

Each host I/O request 504 has an associated I/O size 516, and for simplicity in this example, all I/O requests 504 are shown with the same I/O size 516. Additionally, each I/O request 504 is addressed to an LBA range 520, including a starting LBA Address 524 and an ending LBA address 532. The storage controller 108 receives each I/O request 504 at a specific time 528. For example, the storage controller 108 receives sequential host I/O request 0 504a at time t₀, sequential host I/O request 1 504b at time t₁, and sequential host I/O request 2 504c at time t₂.

The storage controller 108 determines if each received host I/O request 504 is either sequential or non-sequential, and this is described in more detail with respect to the following flowcharts and accompanying description. For sequential host I/O requests 504, the storage controller 108 establishes both a stream window 508 and move window 512, where the move window 512 represents an LBA range 520 that is smaller than the LBA range 520 used for the stream window 508, and contained within the boundaries of the stream window 508. The stream window 508 establishes the LBA limits for the current stream 308a, while the storage controller 108 uses the move window to determine when the move window 512 and stream window 508 boundaries need to change. If a sequential host I/O request 504 is within a stream window 508, but outside the move window 512 corresponding to the stream window 508, the move window 512 and stream window 508 boundaries need to change. The objective is to keep sequential I/O requests 504 for the same stream 308a within a move window 512 and stream window 508.

The storage controller 108 initially establishes the move window 512a based on LBAs of sequential I/O requests 504a, 504b, and 504c. I/O requests 504d, 504e, and 504f are clearly outside both move window 512a and stream window 508a, which indicates to storage controller 108 that the move window 512 and stream window 508 need to change. The storage controller 108 next establishes that I/O requests 504g, 504h, 504i, and 504j are sequential I/O requests 504, and changes the move window 512 to have the boundaries of move window 512b and the stream window 508 to have the boundaries of stream window 508b. I/O requests 504k, 5041, and 504m are clearly outside both move window 512b and stream window 508b, which indicates to storage controller 108 that the move window 512 and stream window 508 need to change. The storage controller 108 next establishes that I/O requests 504n, 504o, 504p, and 504q are sequential I/O requests 504, and changes the move window 512 to have the boundaries of move window 512c and the stream window 508 to have the boundaries of stream window 508c. The processes that track move window 512 and stream window 508 boundaries are central to the present invention, and are described in detail with respect to Figures 10-17.

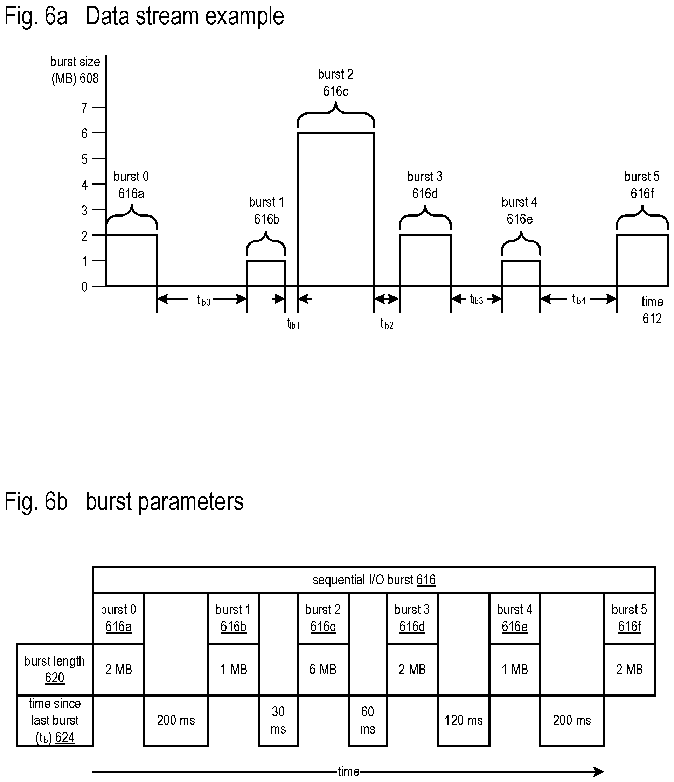

Referring now to Figure 6a, a diagram illustrating a second host data stream 308b example in accordance with embodiments of the present invention is shown. A group of 6 bursts 616 are shown received over time 612 by a storage controller 108, with burst size 608 in Megabytes (MB) shown for each burst 616. The example illustrated in Figure 6a depicts 6 bursts of sequential host I/O requests 332, identified as burst 0 616a, burst 1 616b, burst 2 616c, burst 3 616d, burst 4 616e, and burst 5 616f.

The time between bursts t_{lb} is shown between every two consecutive bursts 616. The time between burst 0 616a and burst 1 616b is t_{lb0}. The time between burst 1 616b and burst 2 616c is t_{lb1}. The time between burst 2 616c and burst 3 616d is t_{lb2}. The time between burst 3 616c and burst 4 616d is t_{lb3}. Finally, the time between burst 4 616d and burst 5 616e is t_{lb4}.

Referring now to Figure 6b, a diagram illustrating burst parameters in accordance with embodiments of the present invention is shown. Figure 6b references the example of Figure 6a to illustrate burst parameters stored in metadata memory 320.

Each burst 616 has an associated burst length 620 parameter, with burst 0 616a having a burst length 620 of 2 MB, burst 1 616b having a burst length 620 of 1 MB, burst 2 616c having a burst length 620 of 6 MB, burst 3 616d having a burst length 620 of 2 MB, burst 4 616e having a burst length 620 of 1 MB, and burst 5 616f having a burst length 620 of 2 MB. Between each burst 616 is a time since last burst t_{lb} 624. T_{lb0} is 200ms, T_{lb1} is 30ms, T_{lb2} is 60ms, T_{lb3} is 120ms, and T_{lb4} is 200ms.

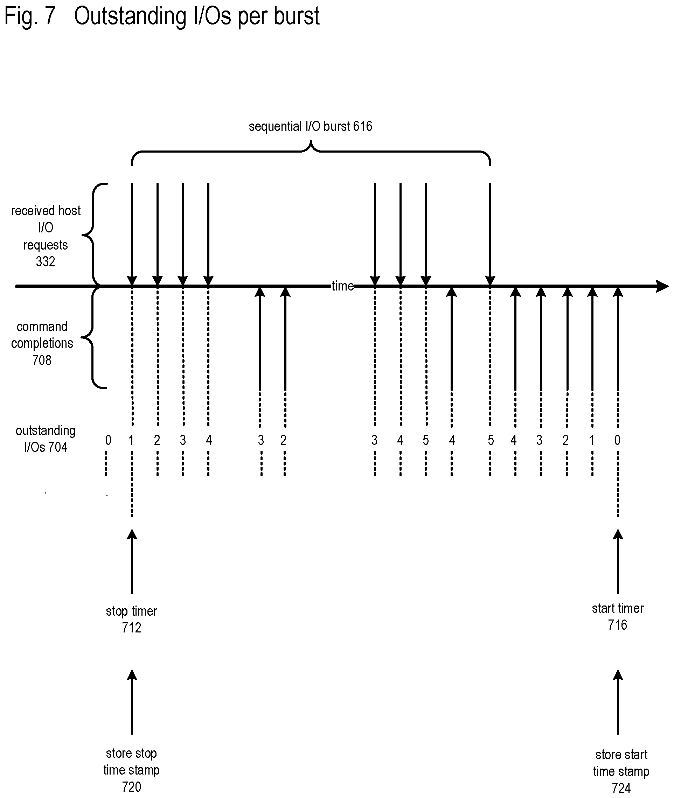

Referring now to Figure 7, a diagram illustrating outstanding I/Os per burst 616 in accordance with embodiments of the present invention is shown. Figure 7 illustrates the practical interaction of various parameters over time of the present invention for a burst 616 of host I/O requests 332. For simplification purposes, it is assumed that the I/O length 440 for all host I/O requests 332 is '1' (a block, for example).

Prior to a first host I/O request 332 for the burst 616, the outstanding I/Os 704 is zero. When the storage controller 108 receives a first host I/O request 332 for the burst 616, the outstanding I/Os 704 becomes '1' - reflecting the size of the first host I/O request 332, and either the timer 340 is stopped 712 in a first embodiment, or else a stop time stamp 720 is stored in a second embodiment.

The storage controller 108 adjusts the outstanding I/Os 704 as more host I/O requests 332 are received. However, when command completions 708 occur, the storage controller 108 decreases the outstanding I/Os 704 by the size of each completed host I/O request 708. Once the outstanding I/Os 704 returns to zero (indicating the end of the current burst 616), the storage controller 108 either starts the timer 716 in the first embodiment, or else stores the start time stamp 724 in metadata memory 320 in the second embodiment. This sequence of operations is then repeated for each subsequent burst 616.

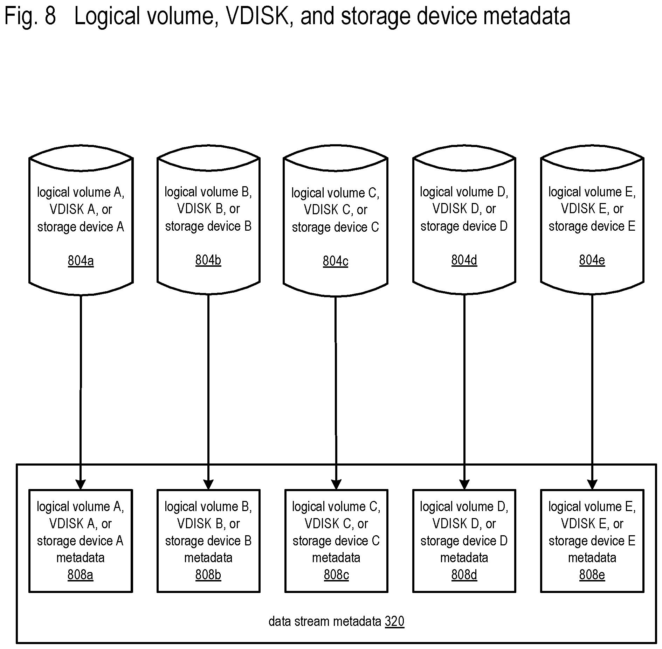

Referring now to Figure 8, a diagram illustrating logical volume, VDisk, and storage device metadata 808 in accordance with embodiments of the present invention is shown. Sequential host I/O requests 332, 504 may be directed to either logical volumes, VDisks, or storage devices 116, and storage controller 108 has one or more logical volumes, VDisks, or storage devices 116. Figure 8 illustrates a system where a storage controller 108 has five logical volumes, VDisks, or storage devices 116, identified as 804a through 804e.

Each logical volume, VDisk, or storage device 804 has corresponding logical volume, VDisk, or storage device metadata set 808a, and each metadata set 808 is managed independently from the other metadata sets 808. In the preferred embodiment, the storage controller 108 tracks approximately 1,000 logical volumes, VDisks, or storage devices 804, 65 sequential I/O streams 308 for the first 32 logical volumes, VDisks, or storage devices 804, and 4 sequential I/O streams 308 for the any logical volumes, VDisks, or storage devices 804 beyond the first 32 logical volumes, VDisks, or storage devices 804.

In an alternative embodiment, there is a common pool of active streams 908 available to all logical volumes, VDisks, or storage devices 804, instead of an active stream list 908 allocated to each logical volume, VDisk, or storage device 804. This has the advantage of additional flexibility in assigning or limiting streams to each logical volume, VDisk, or storage device 804, at the penalty of additional management complexity.

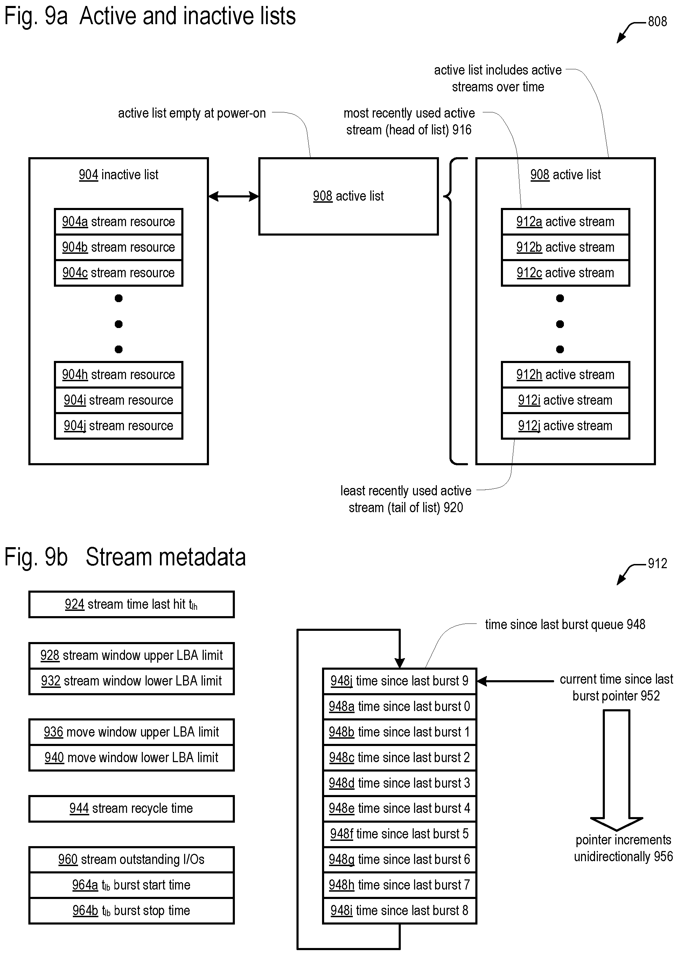

Referring now to Figure 9a, a block diagram illustrating active 908 and inactive lists 904 stored in data stream metadata memory 320 in accordance with embodiments of the present invention is shown. The metadata memory 320 stores parameters used in the process of the present invention.

Each logical volume, VDisk, or storage device 804 has a corresponding active 908 and inactive 904 list. There are a predetermined number of stream resources 904a-z available for each logical volume, VDisk, or storage device 804, and each stream resource 904a-z stores metadata parameters for a single sequential host I/O stream 308. Initially, all stream resources 904a-z are on the inactive list 904. Later, as individual streams 308 are tracked, the stream resources 904a-z become active streams 912a-z. In all cases, the number of stream resources 904a-z plus the number of active streams 912a-z is always equal to the predetermined number. In the preferred embodiment, the predetermined number of stream resources 904a-z plus active streams 912a-z is equal to 65. This number is determined by the size of memory 316 on the storage controller 108, the size of data structures 808, and the number of sequential host I/O streams 308 it is productive to concurrently track.

The inactive list 904 contains available resources that can be assigned to new streams 308. As a stream resource 904a-z is assigned to an active stream 912a-z, the inactive list is reduced by one stream resource 904a-z. At some point, all stream resources 904a-z may be assigned to active streams 912a-z. In that case, there are no more stream resources 904a-z on the inactive list 904, and the storage controller 108 must free up at least one active stream 912a-z on the active list 908 in order to assign a stream resource 904a-z to a new stream 308. All stream resources 904a-z on the inactive list 904 are equal in all respects, and any stream resource 904a-z may be selected for a new stream 308.

The active list 908 contains active streams 908a-z for streams 308 directed to the current logical volume, VDisk, or storage device 804. At power-on, all active lists 908 are empty, and contain no active streams 912a-z. As stream resources 904a-z are assigned to active streams 912a-z, the active list 908 is populated. At some point, all stream resources 904a-z may be assigned to the active list 908, and the active list 908 will contain the predetermined number of active streams 912a-z. Active streams 912a-z are ordered within the active list 908, with the most recently used active stream placed at the head of the active list 916. Therefore, the least recently used active stream is placed at the tail of the active list 920, opposite to the head of the active list 916.

Each active stream entry 912a-z includes a number of metadata parameters used by the storage controller 108 to track each active stream 912. A stream last hit (tₗₕ) 924 value stores the time the corresponding stream was last accessed. The current stream window 508 has boundaries designated by a stream window upper LBA limit 928 and a stream window lower LBA limit 932. The current move window 512 has boundaries designated by a move window upper LBA limit 936 and a move window lower LBA limit 940. Each stream 308 also has a stream recycle time 944, which is used to calculate when an active stream 912 needs to be recycled to the inactive list 904 to generate a newly available stream resource 904a-z. Each stream 308 has a count of stream outstanding I/Os 960, which the storage controller 108 uses in order to determine when streams 308 start and stop. The stream outstanding I/Os 960 stores the count identified by outstanding I/Os in Figure 7.

The storage controller 108 keeps track of burst start time 964a and burst stop time 964b in order to calculate time since last burst (t_{lb}) entries for a time since last burst (t_{lb}) queue 948. The burst start time 964a is stored when the stream outstanding I/Os 960 transitions from 1 to 0. The burst stop time 964b is stored when the stream outstanding I/Os 960 transitions from 0 to 1.

The time since last burst queue 948 is a circular queue of a specified number of time since last burst entries 948a-j. In the preferred embodiment, there are 10 time since last burst entries a-j on the time since last burst queue 948. In other embodiments, there may be less than or more than 10 entries. The current entry in the time since last burst queue 948 is identified by a current time since last burst pointer 952, which increments unidirectionally 956 as directed by the process of the present invention.

The storage controller 108 measures the time since last burst t_{lb} one of two ways. In one embodiment, the storage controller includes a timer 340. The storage controller 108 starts the timer 340 when a burst 616 ends, and stops the timer 340 when the next burst 616 starts. The timer 340 value is stored as the time since last burst t_{lb} 948a-j at the location in metadata memory 320 identified by the current time since last burst pointer 952. In another embodiment, the metadata memory 320 includes a t_{lb} burst start time 964a and a t_{lb} burst stop time stamp 964b. The t_{lb} burst start time 964a is a free-running timer 340 value that is stored when a burst 616 ends. The t_{lb} burst stop time 964b is a free-running timer 340 value that is stored when the next burst 616 starts. The difference between the t_{lb} burst start time 964a and the t_{lb} burst stop time 964b is stored as the time since last burst t_{lb} entry 948a-j at the location in metadata memory 320 identified by the current time since last burst pointer 952.

Although a circular queue is illustrated for the time since last burst queue 948, it should be understood by one of ordinary skill in the art that any number of data structures can be utilized for storing a plurality of burst lengths 948a-j, including multiple data structures.

Referring now to Figure 10, a flowchart illustrating an initialization process in accordance with embodiments of the present invention is shown. Flow begins at block 1004.

At block 1004, the storage controller 108 populates all inactive lists 904 with a predetermined number of stream resources 904a-j. In the preferred embodiment, the predetermined number of stream resources 904a-j is 65. In other embodiments, the predetermined number of stream resources 904a-j is either more than or less than 65. Flow proceeds to block 1008.

At block 1008, the storage controller 108 sets all window LBA limits 928, 932, 936, and 940 and time last hit values 924 to zero. This is performed for each logical volume, VDISK, or storage device 804 to initialize the logical volume, VDISK, or storage device metadata 808 in preparation for tracking sequential I/O streams 308. Flow proceeds to block 1012.

At block 1012, the storage controller 108 sets the stream recycle time 944 in each logical volume, VDISK, or storage device metadata 808 to a default value. This sets a default value to determine when active streams 912 should be recycled, if necessary. In the preferred embodiment, the default value for the stream recycle time is 6 seconds. In other embodiments, the default value for the stream recycle time 944 is less than or more than 6 seconds. Flow ends at block 1012.

Referring now to Figure 11, a flowchart illustrating a new I/O request update process in accordance with embodiments of the present invention is shown. The new I/O update process keeps track of incoming host I/O requests 332 and adjusts stream recycle time 944 for each active stream 912a-j based on outstanding I/Os 704. Flow begins at block 1104.

At block 1104, the storage controller 108 receives a host I/O request 332 from a host computer 104. Flow proceeds to block 1108.

At block 1108, the storage controller 108 increments the outstanding I/O count 960 for the active stream 912a-j corresponding to the received host I/O request 332. The outstanding I/O count 960 is the current count of I/O requests 332 issued to a logical volume, VDisk, or storage device 804 that have not yet completed. Flow proceeds to decision block 1112.

At decision block 1112, the storage controller 108 determines if the outstanding I/O count 960 is equal to one. If the outstanding I/O count 960 is equal to one, then a new burst 616 has started in the current active stream 912a-j (i.e. the outstanding I/O count 960 was equal to zero before receiving the host I/O request 332 in block 1104). If the outstanding I/O count 960 is equal to one, then flow proceeds to block 1116. If the outstanding I/O count 960 is not equal to one, then a new burst 616 has not started and flow ends. For the purposes of the present invention, it is only important to know when a burst 616 begins and ends, and maintain the time since last burst 948 metadata.

At block 1116, the storage controller 108 stops a burst timer 340 for the active stream 912a-j corresponding to the received host I/O request 332. A new burst 616 has started since the outstanding I/O count 960 transitioned from zero to one; therefore, the time since last burst 948 needs to be recorded. Flow proceeds to block 1120.

At block 1120, the storage controller 108 stores the burst timer 340 value as t_{lb} burst stop time 964b, calculates a time since last burst value 948 as the difference between the burst stop time 964b and the burst start time 964a, and stores the time since last burst value in the time since last burst queue 948 location corresponding to the current time since last burst pointer 952. Flow proceeds to block 1124.

At block 1124, the storage controller 108 increments the current time since last burst pointer 952, and initializes the burst timer 340. In embodiments where the burst timer is free running, it is not required to initialize the burst timer 340. However, these embodiments require storing a burst start time value 964a. This prepares the next time since last burst queue location 948 to store a next time since last burst value 948a-j, and prepares the burst timer 340 to begin counting when the current burst 616 ends. Flow proceeds to decision block 1128.

At decision block 1128, the storage controller 108 determines if the time since last burst queue 948 is full. The time since last burst queue 948 is full if every location in the queue 948a-j contains a burst timer 340 value. If the time since last burst queue 948 is full, then flow proceeds to block 1132. If the time since last burst queue 948 is not full, then flow ends. New stream recycle times 944 are only calculated if the time since last burst queue 948 is full. Before the time since last burst queue 948 is full, a default value is used for the stream recycle time 944. In the preferred embodiment, the default value for the stream recycle time 944 is 6 seconds. In other embodiments, the default value for the stream recycle time 944 is less than or more than 6 seconds.

At block 1132, the storage controller 108 calculates a weighted average of the time since last burst queue 948 to create a stream recycle time 944. A weighted average is preferable in order to give more recent time since last burst values 948a-j greater weight than older time since last burst values 948a-j. In the preferred embodiment, there are ten time since last burst values 948a-j in each time since last burst queue 948. Also in the preferred embodiment, the weighted average is equal to the sum of each weighted time since last burst values 948a-j divided by ten factorial. The storage controller 108 calculates the weighted time since last burst values 948a-j by multiplying the most recent t_{lb} value by 10, the next most recent t_{lb} value by 9, and so forth, until the least recent t_{lb} value is multiplies by 1. The most recent t_{lb} value is identified by the current position of the time since last burst pointer 952. In other embodiments, the weighted average is calculated differently, or the stream recycle time 944 is a simple non-weighted average of the values in the time since last burst queue 948. Flow proceeds to block 1136.

At block 1136, the storage controller 108 stores the calculated stream recycle time from block 1132 in the stream recycle time 944 location corresponding to the received host I/O request 332. Flow ends at block 1136.

Referring now to Figure 12, a flowchart illustrating a command completion process in accordance with embodiments of the present invention is shown. Flow begins at block 1204.

At block 1204, a host I/O request 332 completes. The host I/O request 332 was directed to a specific logical volume, VDisk, or storage device 804. Flow proceeds to block 1208.

At block 1208, the storage controller 108 decrements the outstanding I/O count 960 for the active stream 912a-j corresponding to the completed host I/O request 332. There is now one less outstanding I/O 704 to the logical volume, VDisk, or storage device 804 the completed host I/O request 332 was directed to. Flow proceeds to decision block 1212.

At decision block 1212, the storage controller 108 determines if the outstanding I/O count 960 is equal to zero. If the outstanding I/O count 960 is equal to zero, then the current burst 616 has ended and flow proceeds to block 1216. If the outstanding I/O count 960 is not equal to zero, then the current burst 616 has not ended and flow ends at decision block 1212.

At block 1216, the storage controller 108 initializes and starts a burst timer 340 for the active stream 912a-j corresponding to the completed host I/O request 332. Flow proceeds to block 1220.

At block 1220, the storage controller 108 stores the burst timer value 340 as the burst start time 964a for the active stream 912a-j corresponding to the completed host I/O request 332. Flow ends at block 1220.

Referring now to Figure 13, a flowchart illustrating an I/O request 332 update process in accordance with embodiments of the present invention is shown. Flow begins at block 1304.

At block 1304, the storage controller 108 receives a host I/O request 332 from a host computer 104. Flow proceeds to block 1308.

At block 1308, the storage controller 108 searches the active list 908 corresponding to the logical volume, VDisk, or storage device 804 that the host I/O request 332 is directed to. Flow proceeds to decision block 1312.

At decision block 1312, the storage controller 108 determines if the starting LBA 524 of the received host I/O request 332 is within an active stream window 508. The process for searching the active list 908 and comparing the starting LBA 524 to the stream window 508 limits is described in more detail with reference to Figure 14. If the starting LBA 524 of the received host I/O request 332 is within an active stream window 508, then flow proceeds to block 1336. If the starting LBA 524 of the received host I/O request 332 is not within an active stream window 508, then flow proceeds to decision block 1316.

At decision block 1316, the storage controller 108 determines if the inactive list 904 corresponding to the logical volume, VDisk, or storage device 804 that the host I/O request 332 is directed to is empty. The host I/O request 332 is not within an active stream window 908; therefore, a new active stream 908a-j needs to be created. If the inactive list 904 corresponding to the logical volume, VDisk, or storage device 804 that the host I/O request 332 is directed to is empty, then flow proceeds to block 1320. If the inactive list 904 corresponding to the logical volume, VDisk, or storage device 804 that the host I/O request 332 is directed to is not empty, then flow proceeds to block 1328.

At block 1320, the storage controller 108 recycles stale streams. No stream resources 904a-j are available in the inactive list 904, and the storage controller 108 needs to recycle one or more active streams 912a-j from the active list 908. The active stream recycle process is described in more detail in Figures 15a, 15b, and 15c. Embodiments that recycle only a single active stream 912a-j at a time use the process of Figure 15a. Embodiments that recycle up to a predetermined number of active streams 912a-j at a time use the process of Figure 15b. Embodiments that recycle all active streams 912a-j that meet the recycle criteria use the process of Figure 15c. Flow proceeds to decision block 1324.

At decision block 1324, the storage controller 108 once again determines if the inactive list 904 corresponding to the logical volume, VDisk, or storage device 804 that the host I/O request 332 is directed to is empty. It is possible that none of the stale stream recycle processes of Figures 15a-15c will identify any stale streams 308 that can be recycled. If that is the case, then flow ends at decision block 1324. However, if the processes of Figures 15a-15c identified at least one stale stream 308 that can be recycled and placed the stream(s) 308 on the inactive list 904, then flow proceeds to block 1328.

At block 1328, the storage controller 108 removes a stream resource 904a-j from the inactive list 904. There is now one less stream resource 904a-j on the inactive list 904 than before, and if there was only one stream resource 904a-j on the inactive list 904 prior to this step, there are now zero stream resources 904a-j on the inactive list 904. Flow proceeds to block 1332.

At block 1332, the storage controller 108 configures a new active stream 912a-j, using the recently recovered stream resource 904a-j from the inactive list 904. The new active stream 912a-j configuration process is described in more detail with respect to Figure 16. Flow proceeds to block 1340.

At block 1336, the storage controller 108 removes an active stream 912a-j from the active list 908. The starting LBA 524 of the received host I/O request 332 is within an active stream window 508, and the storage controller removes the active stream 912a-j corresponding to the received host I/O request 332 from the active list 908. Flow proceeds to block 1340.

At block 1340, the storage controller 108 updates the time last hit 924 for the removed active stream 912a-j to reflect the current time. Flow proceeds to block 1344.

At block 1344, the storage controller 108 adjusts the move window 512 for the removed active stream 912a-j, if necessary. If the starting LBA 524 of the received host I/O request 332 is outside the current move window 512, the storage controller 108 adjusts the move window limits 936, 940. This process is described in more detail with respect to Figure 17. Flow proceeds to block 1348.

At block 1348, the storage controller 108 places the adjusted active stream 912a-j to the head of the active list 916. This step maintains the active list 908 ordering with the most recently used active streams at the head of the active list 916, and the least recently used active streams 912 at the tail of the active list 920. At this point, the active 908 and inactive 904 lists have been adjusted to account for the received host I/O request 332, and therefore flow ends at block 1348.

Referring now to Figure 14, a flowchart illustrating a stream association process in accordance with embodiments of the present invention is shown. The stream association process identifies an active stream 912a-j, if present, in the active list 908 corresponding to the logical volume, VDisk, or storage device 804 that the received host I/O request 332 is directed to. Flow begins at block 1404.

At block 1404, the storage controller 108 determines if the active list 908 is empty. It is possible that no active streams 912a-j are currently in the active list 908, such as following power-on initialization. If the active list 908 is empty, the flow proceeds to block 1412. If the active list 908 is not empty, then flow proceeds to block 1408.

At block 1408, the storage controller 108 selects a first active list entry 912a from the head of the active list 916. There is at least one active stream 912a-j in the active list 908, and the most recent entry 916 is selected. Flow proceeds to decision block 1416.

At decision block 1416, the storage controller 108 determines if the starting LBA 524 of the received host I/O request 332 is less than the stream window upper LBA limit 928. If the starting LBA 524 of the received host I/O request 332 is less than the stream window upper LBA limit 928, then flow proceeds to decision block 1420. If the starting LBA 524 of the received host I/O request 332 is not less than the stream window upper LBA limit 928, then the received host I/O request 332 is not within the stream window 508 and flow proceeds to decision block 1428.

At decision block 1420, the storage controller 108 determines if the starting LBA 524 of the received host I/O request 332 is more than the stream window lower LBA limit 932. If the starting LBA 524 of the received host I/O request 332 is more than the stream window lower LBA limit 932, then flow proceeds to block 1424. If the starting LBA 524 of the received host I/O request 332 is not more than the stream window lower LBA limit 932, then the received host I/O request 332 is not within the stream window 508 and flow proceeds to decision block 1428.

At block 1424, the storage controller 108 has determined that the received host I/O request 332 is within the selected active stream window 508. Flow ends at block 1424, returning processing to decision block 1312 of Figure 13, and transitioning to block 1336.

At decision block 1428, the storage controller 108 determines if there are more active list entries 912a-j to search. If there are more active list entries 912a-j to search, then flow proceeds to block 1436. If there are not more active list entries 912a-j to search, then flow proceeds to block 1432.

At block 1432, the storage controller 108 has determined that the received host I/O request 332 does not correspond to any active streams 912a-j in the active list 908. Flow ends at block 1432, returning processing to decision block 1312 of Figure 13, and transitioning to decision block 1316.

At block 1436, the storage controller 108 selects a next active list entry 912a-j. Since the storage controller 108 selected the initial active list entry 912a-j from the head of the active list 916, the next active list entry 912a-j will be the next most recent active list entry 912a-j. Flow proceeds to decision block 1416 to test the stream window upper and lower LBA limits 928, 932.

The method of finding a matching active stream 912 can be improved in order to reduce the time required to search to the end of the active list 908. Alternate embodiments using data structures including interval trees or skip lists allow an LBA-based lookup and improve performance by rapidly matching up a host I/O request 332 with an active stream 912.

Referring now to Figure 15a, a flowchart illustrating a single stale stream recycle process in accordance with a first embodiment of the present invention is shown. The embodiment illustrated in Figure 15a recycles only a single active stream 912a-j at a time from the active list 908. Flow begins at block 1504.

At block 1504, the storage controller 108 checks the active list 908 for a first stale active stream 912a-j, beginning with the tail of the active list 920. The tail of the active list 920 contains the least recently used active list entry 912a-j. Flow proceeds to decision block 1508.

At decision block 1508, the storage controller 108 determines if the difference between the current time and the last time hit 924 is less than the stream recycle time 944, for the selected active stream 912a-j. The storage controller 108 calculates the stream recycle time 944 as described with reference to Figure 11. If the difference between the current time and the last time hit 924 is less than the stream recycle time 944, then flow proceeds to block 1512. If the difference between the current time and the last time hit 924 is not less than the stream recycle time 944, then flow proceeds to decision block 1528.

At block 1512, the storage controller 108 removes the selected active stream 912a-j from the active list 908. The selected active stream 912a-j meets the stream recycle criteria of decision block 1508. Flow proceeds to block 1516.

At block 1516, the storage controller 108 sets the time last hit 924 for the selected active stream 912a-j to zero. This begins initialization of the active stream 912a-j, in preparation for returning the active stream 912a-j to a stream resource 904a-j. Flow proceeds to block 1520.

At block 1520, the storage controller 108 sets all window LBA limits 928, 932, 936, and 940 for the selected active stream 912a-j to zero. This completes initialization of the active stream 912a-j, in preparation for returning the active stream 912a-j to a stream resource 904a-j. Flow proceeds to block 1524.

At block 1524, the storage controller 108 places the selected and now initialized active stream 912a-j on the inactive list 904 as a stream resource 904a-j. A single active stream 912a-j has been recycled, and flow ends at block 1524. Flow proceeds to decision block 1324 of Figure 13.

At decision block 1528, a candidate active stream 912a-j has not yet been identified for recycling to the inactive list 904, and the storage controller 108 determines if there are more active streams 912a-j in the active list 908. If there are more active streams 912a-j in the active list 908, then flow proceeds to decision block 1532. If there are not more active streams 912a-j in the active list 908, then no active streams 912a-j can be recycled, and flow ends at block 1528. Flow proceeds to decision block 1324 of Figure 13.

At decision block 1532, the storage controller 108 determines if a next most recent active stream 912a-j in the active list 908 is available. If a next most recent active stream 912a-j in the active list 908 is available, then flow proceeds to block 1536. If a next most recent active stream 912a-j in the active list 908 is not available, then flow ends at block 1532 and no active streams 912a-j in the active list 908 met the recycle criteria. Flow proceeds to decision block 1324 of Figure 13.

At block 1536, the storage controller 108 selects a next most recent active stream 912a-j up from the tail of the active list 920. Flow proceeds to decision block 1508 to check if the selected active stream 912a-j meets the recycle criteria.

Referring now to Figure 15b, a flowchart illustrating a predetermined number of stale streams recycle process in accordance with a second embodiment of the present invention is shown. The embodiment illustrated in Figure 15b recycles up to a predetermined number of active streams 912a-j at a time from the active list 908. Flow begins at block 1540.

At block 1540, the storage controller 108 checks the active list 908 for a predetermined number of stale active streams 912a-j, beginning with the tail of the active list 920. The tail of the active list 920 contains the least recently used active list entry 912a-j. Flow proceeds to decision block 1544.

At decision block 1544, the storage controller 108 determines if the difference between the current time and the last time hit 924 is less than the stream recycle time 944, for the selected active stream 912a-j. The storage controller 108 calculates the stream recycle time 944 as described with reference to Figure 11. If the difference between the current time and the last time hit 924 is less than the stream recycle time 944, then flow proceeds to block 1548. If the difference between the current time and the last time hit 924 is not less than the stream recycle time 944, then flow proceeds to decision block 1568.

At block 1548, the storage controller 108 removes the selected active stream 912a-j from the active list 908. The selected active stream 912a-j meets the stream recycle criteria of decision block 1544. Flow proceeds to block 1552.

At block 1552, the storage controller 108 sets the time last hit 924 for the selected active stream 912a-j to zero. This begins initialization of the active stream 912a-j, in preparation for returning the active stream 912a-j to a stream resource 904a-j. Flow proceeds to block 1556.

At block 1556, the storage controller 108 sets all window LBA limits 928, 932, 936, and 940 for the selected active stream 912a-j to zero. This completes initialization of the active stream 912a-j, in preparation for returning the active stream 912a-j to a stream resource 904a-j. Flow proceeds to block 1560.

At block 1560, the storage controller 108 places the selected and now initialized active stream 912a-j on the inactive list 904 as a stream resource 904a-j. A single active stream 912a-j has been recycled, and flow proceeds to decision block 1564.

At decision block 1564, the storage controller 108 determines if the predetermined number of active streams 912a-j have been recycled. If the predetermined number of active streams 912a-j have been recycled, then flow ends. Flow then proceeds to decision block 1324 of Figure 13. If the predetermined number of active streams 912a-j have not been recycled, then flow proceeds to decision block 1570.

At decision block 1568, the storage controller 108 determines if there are more active streams 912a-j in the active list 908. If there are more active streams 912a-j in the active list 908, then flow proceeds to decision block 1570. If there are not more active streams 912a-j in the active list 908, then no active streams 912a-j can be recycled, and flow ends at block 1568. Flow then proceeds to decision block 1324 of Figure 13.

At decision block 1570, the storage controller 108 determines if a next most recent active stream 912a-j in the active list 908 is available. If a next most recent active stream 912a-j in the active list 908 is available, then flow proceeds to block 1572. If a next most recent active stream 912a-j in the active list 908 is not available, then flow ends at block 1570. Flow then proceeds to decision block 1324 of Figure 13.

At block 1572, the storage controller 108 selects a next most recent active stream 912a-j up from the tail of the active list 920. Flow proceeds to decision block 1544 to check if the selected active stream 912a-j meets the recycle criteria.

Referring now to Figure 15c, a flowchart illustrating an all stale streams recycle process in accordance with a third embodiment of the present invention is shown. The embodiment illustrated in Figure 15c recycles as many active streams 912a-j as possible from the active list 908. Flow begins at block 1574.

At block 1574, the storage controller 108 checks for all stale active streams 912a-j in the active list 908, beginning with the tail of the active list 920. The tail of the active list 920 contains the least recently used active list entry 912a-j. Flow proceeds to decision block 1576.

At decision block 1576, the storage controller 108 determines if the difference between the current time and the last time hit 924 is less than the stream recycle time 944, for the selected active stream 912a-j. The storage controller 108 calculates the stream recycle time 944 as described with reference to Figure 11. If the difference between the current time and the last time hit 924 is less than the stream recycle time 944, then flow proceeds to block 1578. If the difference between the current time and the last time hit 924 is not less than the stream recycle time 944, then flow proceeds to decision block 1588.

At block 1578, the storage controller 108 removes the selected active stream 912a-j from the active list 908. The selected active stream 912a-j meets the stream recycle criteria of decision block 1576. Flow proceeds to block 1580.

At block 1580, the storage controller 108 sets the time last hit 924 for the selected active stream 912a-j to zero. This begins initialization of the active stream 912a-j, in preparation for returning the active stream 912a-j to a stream resource 904a-j. Flow proceeds to block 1582.

At block 1582, the storage controller 108 sets all window LBA limits 928, 932, 936, and 940 for the selected active stream 912a-j to zero. This completes initialization of the active stream 912a-j, in preparation for returning the active stream 912a-j to a stream resource 904a-j. Flow proceeds to block 1584.

At block 1584, the storage controller 108 places the selected and now initialized active stream 912a-j on the inactive list 904 as a stream resource 904a-j. The selected active stream 912a-j has been recycled, and flow proceeds to decision block 1586.

At decision block 1586, the storage controller 108 determines if there are more active streams 912a-j to search. If there are more active streams 912a-j to search, then flow proceeds to block 1590. If there are no more active streams 912a-j to search, then flow ends. Flow then proceeds to decision block 1324 of Figure 13.

At decision block 1588, the storage controller 108 determines if there are more active streams 912a-j in the active list 908. If there are more active streams 912a-j in the active list 908, then flow proceeds to block 1590. If there are not more active streams 912a-j in the active list 908, then no active streams 912a-j can be recycled, and flow ends at block 1588. Flow then proceeds to decision block 1324 of Figure 13.

At block 1590, the storage controller 108 selects a next most recent active stream 912a-j up from the tail of the active list 920. Flow proceeds to decision block 1576 to check if the selected active stream 912a-j meets the recycle criteria.

Referring now to Figure 16, a flowchart illustrating an active stream configuration process in accordance with embodiments of the present invention is shown. The embodiment illustrated in Figure 16 configures up an active stream 912a-j from a stream resource 904a-j from the inactive list. Flow begins at block 1604.

At block 1604, the storage controller 108 multiplies the host I/O request size by 8 to create a stream window offset. Flow proceeds to block 1608.

At block 1608, the storage controller 108 adds the stream window offset from block 1604 to the host I/O request starting LBA address 524, and stores the resulting stream window upper LBA limit 928 into stream metadata 912. Flow proceeds to block 1612.

At block 1612, the storage controller 108 subtracts the stream window offset from block 1404 from the received host I/O request starting LBA address 524 to create a temporary stream window lower LBA limit. Flow proceeds to decision block 1616.

At decision block 1616, the storage controller 108 determines if the temporary stream window lower LBA limit is less than 0. If the temporary stream window lower LBA limit is less than 0, then flow proceeds to block 1624. If the temporary stream window lower LBA limit is not less than 0, then flow proceeds to block 1620.

At block 1620, the storage controller 108 stores the temporary stream window lower LBA limit from block 1412 into the stream window lower LBA limit 932. Flow ends at block 1620. Flow then proceeds to block 1340 of Figure 13.

At block 1624, the storage controller 108 stores a zero value into the stream window lower LBA limit 932. Flow ends at block 1624. Flow then proceeds to block 1340 of Figure 13.

Referring now to Figure 17, a flowchart illustrating a move window adjustment process in accordance with embodiments of the present invention is shown. The move window adjustment process determines if the upper and lower LBA limits 936, 940 for move windows 512 need to be adjusted based on LBAs 520 of host I/O requests 332. Figure 17 shows in more detail the process described in block 1344 of Figure 13. Flow begins at decision block 1704.

At decision block 1704, the storage controller 108 determines if the starting LBA address 524 of the received host I/O request 332 from block 1304 is outside the move window 512 corresponding to the active stream window 508. If the starting LBA address 524 of the received host I/O request 332 from block 1304 is outside the move window 512 corresponding to the active stream window 508, then the move window 512 needs to be adjusted and flow proceeds to block 1708. If the starting LBA address 524 of the received host I/O request 332 from block 1304 is not outside the move window 512 corresponding to the active stream window 508, then the move window 512 does not need to change and flow ends. Flow then proceeds to block 1348 of Figure 13.

At block 1708, the storage controller 108 subtracts the stream window lower LBA limit 932 from the stream window upper LBA limit 928 to obtain a stream window 508 size. Flow proceeds to block 1712.

At block 1712, the storage controller 108 divides the stream window 508 size by 2 and adds to the stream window lower LBA limit 932 to obtain the stream window center. Flow proceeds to decision block 1716.

At decision block 1716, the storage controller 108 determines if the starting LBA address 524 of the received host I/O request 332 is directly adjacent to the immediately previous host I/O request 332. Directly adjacent means the starting LBA address 524 of the received host I/O request 332 immediately follows the ending LBA address 532 of the immediately previous host I/O request 332. If the starting LBA address 524 of the received host I/O request 332 is directly adjacent to the immediately previous host I/O request 332, then flow proceeds to block 1720. If the starting LBA address 524 of the received host I/O request 332 is not directly adjacent to the immediately previous host I/O request 332, then flow proceeds to block 1724.

At block 1720, the storage controller 108 multiplies the stream window size 508 by a sequential stream window modifier to obtain a new move window size 512. The sequential stream window modifier is used when the starting LBA address 524 of the received host I/O request 332 is directly adjacent to the immediately previous host I/O request 332. In the preferred embodiment, the sequential stream window modifier is 0.5. In other embodiments, the sequential stream window modifier is either less than or more than 0.5. Flow proceeds to block 1728.

At block 1724, the storage controller 108 multiplies the stream window size 508 by a semi-sequential stream window modifier to obtain a new move window size 512. The semi-sequential stream window modifier is used when the starting LBA address 524 of the received host I/O request 332 is not directly adjacent to the immediately previous host I/O request 332. In the preferred embodiment, the semi-sequential stream window modifier is 0.4. In other embodiments, the sequential stream window modifier is either less than or more than 0.4. Flow proceeds to block 1728.

At block 1728, the storage controller 108 divides the new move window size 512 by 2 to obtain a half new move window size. Flow proceeds to blocks 1732 and 1740.

At block 1732, the storage controller 108 adds the half new move window size to the stream window center to obtain a new move window upper LBA limit. Flow proceeds to block 1736.

At block 1736, the storage controller 108 stores the new move window upper LBA limit in the move window upper LBA limit 936 in the stream metadata 912. Flow ends at block 1736.

At block 1740, the storage controller 108 subtracts the half new move window size from the stream window center to obtain a new move window lower LBA limit. Flow proceeds to block 1744.

At block 1744, the storage controller 108 stores the new move window lower LBA limit in the move window lower LBA limit 940 in the stream metadata 912. Flow ends at block 1744.

Although the process steps of the present invention describe the storage controller 108 performing the actions, it is understood by one of ordinary skill in the art that a CPU or processor 312 generally performs these steps. However, in other embodiments, one or more processors, state machines, programmable logic devices, or other devices may perform these steps.

Finally, those skilled in the art should appreciate that they can readily use the disclosed conception and specific embodiments as a basis for designing or modifying other structures for carrying out the same purposes of the present invention without departing from the scope of the invention as defined by the appended claims.

## Claims

1. A method for providing efficient I/O request processing in a storage controller (108), in which the storage controller (108) includes an active list (908) of one or more active list entries (912a-z) corresponding to one or more allocated storage controller memory stream resources and an inactive list (904) of one or more inactive list entries (904a-z) corresponding to one or more available but unallocated storage controller memory stream resources, wherein the active list (908) has an active list head (916) corresponding to a most recently used active list entry (912a) at one end of the active list (908) and an active list tail (920) corresponding to a least recently used active list entry (912z) at an opposite end of the active list (908), wherein in response to the storage controller receiving a host I/O request from a host computer, the method comprising, by the storage controller:
determining (1312) if the host I/O request corresponds to an active list entry;
in response to determining that the host I/O request corresponds to an active list entry, updating an existing active list entry of an active list corresponding to the active stream;
in response to determining that the host I/O request does not correspond to an active list entry, determining (1316) whether the inactive list is empty;
in response to determining that the inactive list is not empty, converting (1328) an inactive list entry into a new active list entry and configuring (1332) said new active list entry;
**characterized in that** in response to determining that the inactive list is empty, recycling (1320) one or more stale stream resources from the active list to the inactive list.

2. The method of claim 1, wherein determining if the host I/O request corresponds to an active list entry (1312) comprises:
determining (1404) if the active list is empty, wherein the host I/O request does not correspond to an active list entry if the active list is empty (1412);
in response to identifying that the active list is not empty, searching (1408) the active list entries beginning from the head of the active list and identifying (1416, 1420) if an active list entry is within a stream window corresponding to the active list, wherein the host I/O request corresponds to an active list entry if the active list entry is within the stream window (1424) and does not correspond to an active list entry if the active list entry is not within the stream window (1432); and
repeating searching (1408) and identifying (1416, 1420) until either an active list entry within a stream window is identified or the entire active list is searched without identifying an active list entry within the stream window;
wherein the stream window (508a) comprises an LBA range between a stream window upper LBA limit (928) and a stream window lower LBA limit (932).

3. The method of claim 2, wherein updating an existing active list entry of the active list corresponding to the active stream comprises:
removing (1336) the active list entry that corresponds to the host I/O request from the active list;
updating (1344) a time last hit (tₗₕ)corresponding to said active list entry, wherein the time last hit comprises a time stamp identifying when the host I/O request was received by the storage controller (108),;
adjusting (1344) a move window (512) corresponding to said active list entry, wherein the move window (512) is used to determine if the stream window upper LBA limit (928) and stream window lower LBA limit (932)need to change; and
placing (1348) said active list entry to the head of the active list.

4. The method of claim 3, wherein the move window (512) comprises an LBA range between a move window upper LBA limit (936) and a move window lower LBA limit (940), wherein if the starting LBA of the host I/O request is outside the move window, the method further comprising:
adjusting (1720) the move window upper and lower LBA limits using a sequential stream window modifier if the starting LBA of the host I/O request is directly adjacent to the immediately previous I/O request to the same stream as the host I/O request; and
adjusting (1724) the move window upper and lower LBA limits using a semi-sequential stream window modifier if the starting LBA of the host I/O request is not directly adjacent to the immediately previous I/O request to the same stream as the host I/O request.

5. The method of claim 3, wherein converting (1328) an inactive list entry into a new active list entry comprises removing an inactive list entry from the inactive list.

6. The method of claim 5, wherein recycling one or more stale stream resources from the active list to the inactive list comprises:
searching (1504, 1540, 1574) the active list entries, beginning from the active list tail, for an active list entry for which the difference between a current time and the time last hit (tₗₕ) is less than a stream recycle time (944);
in response to determining (1508, 1544, 1576) that the difference between the current time and the time last hit (tₗₕ) of an active list entry is not less than the stream recycle time(944), selecting (1536, 1572, 1590) a next most recent active list entry from the active list tail if there are more active list entries in the active list and repeating determining (1508, 1544, 1576) if the difference between the current time and the time last hit (tₗₕ) is less than the stream recycle time (944);
in response to determining (1508, 1544, 1576) that the difference between the current time and the time last hit of an active list entry is less than the stream recycle time (944), removing (1512, 1548, 1578) said active list entry from the active list, initializing (1520, 1552, 1580) the time last hit and a stream window (508a) for said active list entry to zero, and placing (1524, 1560, 1584) said active list entry on the inactive list.

7. The method of claim 6, further comprising:
maintaining an outstanding I/O count (960) for each active list entry;
for each active list entry:
incrementing (1108) the outstanding I/O count (960) corresponding to the active list entry when the storage controller receives a host I/O request corresponding to the active list entry;
decrementing (1208) the outstanding I/O count (960) corresponding to the active list entry in response to a host I/O request corresponding to the active list entry completing;
starting (1216) a burst timer (340) corresponding to the active list entry when the outstanding I/O count (960) transitions from one to zero; and
stopping (1116) the burst timer (340) when the outstanding I/O count (960) transitions from zero to one; and
in response to stopping the burst timer (340), storing (1120) the burst timer value in a time since last burst queue location identified by a time since last burst pointer and incrementing (1124) the time since last burst pointer to identify a next time since last burst queue location;
wherein the storage controller (108) maintains a time since last burst queue (948) and time since last burst pointer (952) for each active list entry, wherein the time since last burst queues are circular queues with a predetermined number of locations.

8. The method of claim 7, further comprising:
determining (1128) when a time since last burst queue is full, wherein a time since last burst queue is full if each of the predetermined number of locations contains a nonzero time since last burst entry;
if a time since last burst queue is full, calculating (1132) the stream recycle time (944) based on an average of the time since last burst queue locations and saving the stream recycle time (944) in a storage controller memory location.

9. The method of claim 8, wherein the stream recycle time (944) is a weighted average that comprises a greater weighting applied to more recent time since last burst values and a lesser weighting applied to less recent time since last burst values.

10. A storage controller (108) for providing efficient I/O request processing, comprising:
a processor (312); and
a memory (316), coupled to the processor, the memory comprising:
an active list (908) that stores one or more active list entries (908a-z) corresponding to one or more allocated storage controller memory stream resources, comprising an active list head (916) at one end of the active list corresponding to a most recently used active list entry and an active list tail (920) at an opposite end of the active list corresponding to a least recently used active list entry; and
an inactive list (904) that stores one or more inactive list entries (904a-z) corresponding to one or more available but unallocated memory stream resources;
wherein in response to the storage controller receiving a host I/O request from a host computer, the storage controller is configured to perform a method as claimed in any of claims 1 to 9.

11. A system for providing efficient I/O request processing, comprising:
a host computer (104); and
a storage controller (108) as claimed in claim 10, wherein the storage controller is coupled to the host computer.

## Patentansprüche

1. Verfahren zum Bereitstellen einer effizienten E/A-Anforderungsverarbeitung in einer Speichersteuerung (108), wobei die Speichersteuerung (108) eine aktive Liste (908) von einem oder mehreren aktiven Listeneinträgen (912a-z) entsprechend einem oder mehreren zugewiesenen Speichersteuerungs-Speicherstreamressourcen, und eine inaktive Liste (904) von einem oder mehreren inaktiven Listeneinträgen (904a-z) entsprechend einem oder mehreren verfügbaren, aber nicht zugewiesenen Speichersteuerungs-Speicherstreamressourcen enthält, wobei die aktive Liste (908) einen aktiven Listenkopf (916) entsprechend einem jüngst verwendeten aktiven Listeneintrag (912a) an einem Ende der aktiven Liste (908) und ein aktives Listenende (920) entsprechend einem am wenigsten jüngst verwendeten aktiven Listeneintrag (912z) an einem gegenüberliegenden Ende der aktiven Liste (908), wobei als Reaktion darauf, dass die Speichersteuerung eine Host-E/A-Anforderung von einem Hostrechner erhält, das Verfahren durch die Speichersteuerung umfasst:
Bestimmen (1312), ob die Host-E/A-Anforderung einem aktiven Listeneintrag entspricht;
als Reaktion auf ein Bestimmen, dass die Host-E/A-Anforderung einem aktiven Listeneintrag entspricht, Aktualisieren eines vorhandenen aktiven Listeneintrags einer aktiven Liste entsprechend dem aktive Stream;
als Reaktion auf ein Bestimmen, dass die Host-E/A-Anforderung keinem aktiven Listeneintrag entspricht, Bestimmen (1316), ob die inaktive Liste leer ist;
als Reaktion auf ein Bestimmen, dass die inaktive Liste nicht leer ist, Umwandeln (1328) eines inaktiven Listeneintrags in einen neuen aktiven Listeneintrag und Konfigurieren (1332) des neuen aktiven Listeneintrags;
**dadurch gekennzeichnet, dass** als Reaktion auf ein Bestimmen, dass die inaktive Liste leer ist, Recyceln (1320) von einer oder mehreren abgelaufenen Streamressourcen aus der aktiven Liste zu der inaktiven Liste.

2. Verfahren nach Anspruch 1, wobei ein Bestimmen, ob die Host-E/A-Anforderung einem aktiven Listeneintrag (1312) entspricht, Folgendes umfasst:
Bestimmen (1404), ob die aktive Liste leer ist, wobei die Host-E/A-Anforderung keinem aktiven Listeneintrag entspricht, wenn die aktive Liste leer ist (1412);
als Reaktion auf ein Identifizieren, dass die aktive Liste nicht leer ist, Suchen (1408) der aktiven Listeneinträge beginnend vom Kopf der aktiven Liste und Identifizieren (1416, 1420), ob ein aktiver Listeneintrag innerhalb eines Stream-Fensters entsprechend der aktiven Liste ist, wobei die Host-E/A-Anforderung einem aktiven Listeneintrag entspricht, wenn der aktive Listeneintrag innerhalb des Stream-Fensters (1424) ist und keinem aktiven Listeneintrag entspricht, wenn der aktive Listeneintrag nicht innerhalb des Stream-Fensters (1432) ist; und
Wiederholen eines Suchens (1408) und Identifizierens (1416, 1420), bis entweder ein aktiver Listeneintrag innerhalb eines Stream-Fensters identifiziert ist oder die gesamte aktive Liste durchsucht ist, ohne einen aktiven Listeneintrag innerhalb des Stream-Fensters zu identifizieren;
wobei das Stream-Fenster (508a) einen LBA-Bereich zwischen einer oberen LBA-Grenze des Stream-Fensters (928) und einer unteren LBA-Grenze des Stream-Fensters (932) umfasst.

3. Verfahren nach Anspruch 2, wobei ein Aktualisieren eines vorhandenen aktiven Listeneintrag der aktiven Liste entsprechend dem aktiven Stream Folgendes umfasst:
Entfernen (1336) des aktiven Listeneintrags, der der Host-E/A-Anforderung entspricht, aus der aktiven Liste;
Aktualisieren (1344) einer letzten Trefferzeit (time last hit, tₗₕ) entsprechend dem aktiven Listeneintrag, wobei die letzte Trefferzeit einen Zeitstempel umfasst, der identifiziert, wann die Host-E/A-Anforderung von der Speichersteuerung (108) erhalten wurde;
Einstellen (1344) eines Bewegungsfensters (512) entsprechend dem aktiven Listeneintrag, wobei das Bewegungsfenster (512) zum Bestimmen verwendet wird, ob die obere LBA-Grenze des Stream-Fensters (928) und untere LBA-Grenze des Stream-Fensters (932) geändert werden müssen; und Stellen (1348) des aktiven Listeneintrags an den Kopf der aktiven Liste.

4. Verfahren nach Anspruch 3, wobei das Bewegungsfenster (512) einen LBA-Bereich zwischen einer oberen LBA-Grenze des Bewegungsfensters (936) und einer unteren LBA-Grenze des Bewegungsfensters (940) umfasst, wobei, wenn die Anfangs-LBA der Host-E/A-Anforderung außerhalb des Bewegungsfensters, das Verfahren ferner umfasst:
Einstellen (1720) der oberen und unteren Grenze des Bewegungsfensters unter Verwendung eines sequenziellen Stream-Fenster-Modifizierens, wenn die Anfangs-LBA der Host-E/A-Anforderung direkt anliegend an die direkt vorherige E/A-Anforderung zu demselben Stream wie die Host-E/A-Anforderung ist; und Einstellen (1724) der oberen und unteren Grenze des Bewegungsfensters unter Verwendung eines halbsequenziellen Stream-Fenster-Modifizierers, wenn die Anfangs-LBA der Host-E/A-Anforderung nicht direkt anliegend an die direkt vorherige E/A-Anforderung zu demselben Stream wie die Host-E/A-Anforderung ist.

5. Verfahren nach Anspruch 3, wobei ein Umwandeln (1328) eines inaktiven Listeneintrags in einen neuen aktiven Listeneintrag ein Entfernen eines inaktiven Listeneintrags aus der inaktiven Liste umfasst.

6. Verfahren nach Anspruch 5, wobei ein Recyceln von einer oder mehreren abgelaufenen Streamressourcen aus der aktiven Liste zu der inaktiven Liste Folgendes umfasst:
Durchsuchen (1504, 1540, 1574) der aktiven Listeneinträge beginnend am Ende der aktiven Liste nach einem aktiven Listeneintrag, für den die Differenz zwischen einer aktuellen Zeit und der letzten Trefferzeit (tₗₕ) weniger als eine Stream-Recyclezeit (944) ist;
als Reaktion auf ein Bestimmen (1508, 1544, 1576), dass die Differenz zwischen einer aktuellen Zeit und der letzten Trefferzeit (tₗₕ) eines aktiven Listeneintrags nicht weniger als die Stream-Recyclezeit (944) ist, Auswählen (1536, 1572, 1590) eines nächsten jüngsten aktiven Listeneintrags vom Ende der aktiven Liste, wenn es mehr aktive Listeneinträge in der aktiven Liste gibt und Wiederholen eines Bestimmens (1508, 1544, 1576), ob die Differenz zwischen der aktuellen Zeit und der letzten Trefferzeit (tₗₕ) weniger als die Stream-Recyclezeit (944) ist;
als Reaktion auf ein Bestimmen (1508, 1544, 1576), dass die Differenz zwischen der aktuellen Zeit und der letzten Trefferzeit eines aktiven Listeneintrag weniger als die Stream-Recyclezeit (944) ist, Entfernen (1512, 1548, 1578) des aktiven Listeneintrags aus der aktiven Liste, Initialisieren (1520, 1552, 1580) der letzten Trefferzeit und eines Stream-Fensters (508a) für den aktiven Listeneintrag auf null, und Stellen (1524, 1560, 1584) des aktiven Listeneintrag auf die inaktive Liste.

7. Verfahren nach Anspruch 6, ferner umfassend:
Beibehalten einer offenen E/A-Zählung (960) für jeden aktiven Listeneintrag;
für jeden aktiven Listeneintrag:
Erhöhen (1108) der offenen E/A-Zählung (960) entsprechend dem aktiven Listeneintrag, wenn die Speichersteuerung eine Host-E/A-Anforderung entsprechend dem aktiven Listeneintrag erhält;
Verringern (1208) der offenen E/A-Zählung (960) entsprechend dem aktiven Listeneintrag als Reaktion auf eine Host-E/A-Anforderung entsprechend dem Vervollständigen des aktiven Listeneintrags;
Starten (1216) eines Burst-Timers (340) entsprechend dem aktiven Listeneintrag, wenn die offene I/O-Zählung (960) von eins auf null übergeht; und
Anhalten (1116) des Burst-Timers (340), wenn die offene I/O-Zählung (960) von null auf eins übergeht; und
Als Reaktion auf ein Anhalten des Burst-Timers (340) Speichern (1120) des Werts des Burst-Timers an einer Zeit-seit-letztem-Burst-Schlangenposition, die durch einen Zeit-seit-letztem-Burst-Zeiger identifiziert ist, und erhöhen (1124) des Zeit-seit-letztem-Burst-Zeigers, um eine nächste Zeit-seit-letztem-Burst-Schlangenposition zu identifizieren;
wobei die Speichersteuerung (108) eine Zeit-seit-letztem-Burst-Schlange (948) und einen Zeit-seit-letztem-Burst-Zeiger (952) für jeden aktiven Listeneintrag beibehält, wobei die Zeit-seit-letztem-Burst-Schlangen kreisförmigen Schlangen mit einer vorbestimmten Anzahl an Positionen sind.

8. Verfahren nach Anspruch 7, ferner umfassend:
Bestimmen (1128), wenn eine Zeit-seit-letztem-Burst-Schlange voll ist, wobei eine Zeit-seit-letztem-Burst-Schlange voll ist, wenn jede der vorbestimmten Anzahl an Positionen einen Zeit-seit-letztem-Burst-Eintrag ungleich null enthält;
wenn eine Zeit-seit-letztem-Burst-Schlange voll ist, Berechnen (1132) der Stream-Recyclezeit (944) beruhend auf einem Durchschnitt der Zeit-seit-letztem-Burst-Schlangenpositionen und Speichern der Stream-Recyclezeit (944) an einer Speichersteuerungs-Speicherposition.

9. Verfahren nach Anspruch 8, wobei die Stream-Recyclezeit (944) ein gewichteter Durchschnitt ist, der eine höhere Gewichtung umfasst, die auf jüngere Zeit-seit-letztem-Burst-Werte angewendet wird, und eine niedrigere Gewichtung, die auf weniger junge Zeit-seit-letztem-Burst-Werte angewendet wird.

10. Speichersteuerung (108) zum Bereitstellen einer effizienten E/A-Anforderungsverarbeitung, umfassend:
einen Prozessor (312); und
einen Speicher (316), der mit dem Prozessor gekoppelt ist, wobei der Speicher Folgendes umfasst: eine aktive Liste (908), die einen oder mehrere aktive Listeneinträge (908a-z) entsprechend einem oder mehreren zugewiesenen Speichersteuerungs-Speicherstreamressourcen, umfassend einen aktiven Listenkopf (916) an einem Ende der aktiven Liste entsprechend einem jüngst verwendeten aktiven Listeneintrag und ein aktives Listenende (920) an einem gegenüberliegenden Ende der aktiven Liste entsprechend einem jüngst verwendeten aktiven Listeneintrag; und
eine inaktive Liste (904), die einen oder mehrere inaktive Listeneinträge (904a-z) entsprechend einer oder mehreren verfügbaren aber nicht zugewiesenen Speicherstreamressourcen speichert;
wobei als Reaktion darauf, dass die Speichersteuerung eine Host-E/A-Anforderung von einem Hostrechner erhält, die Speichersteuerung konfiguriert ist, ein Verfahren nach einem der Ansprüche 1 bis 9 auszuführen.

11. System zum Bereitstellen einer effizienten E/A-Anforderungsverarbeitung, umfassend: einen Hostrechner (104); und
eine Speichersteuerung (108) nach Anspruch 10, wobei die Speichersteuerung mit dem Hostrechner gekoppelt ist.

## Revendications

1. Méthode d'exécution d'un traitement efficace des demandes d'E/S dans un contrôleur de stockage (108), dans lequel le contrôleur de stockage (108) comprend une liste active (908) d'une ou plusieurs entrées de liste active (912a-z) correspondant à une ou plusieurs ressources attribuées de flux de mémoire de contrôleur de stockage et à une liste inactive (904) d'une ou plusieurs entrées de liste inactive (904a-z) correspondant à une ou plusieurs ressources disponibles mais non attribuées de flux de mémoire de contrôleur de stockage, la liste active (908) possédant une tête de liste active (916), correspondant à une entrée de liste active (912a) la plus récemment utilisée à un bout de la liste active (908), et une queue de liste active (920) correspondant à une entrée de liste active la moins récemment utilisée (912z) à un bout opposé de la liste active (908), dans laquelle, en réponse à la réception, par le contrôleur de stockage, d'une demande d'E/S hôte d'un ordinateur hôte, la méthode comprenant, par le contrôleur de stockage, ce qui suit :
déterminer (1312) si la demande d'E/S de l'hôte correspond à une entrée de liste active ;
en réponse à la détermination que la demande d'E/S de l'hôte correspond à une entrée de liste active, mettre à jour une entrée de liste active existante d'une liste active correspondant au flux actif ;
en réponse à la détermination que la demande d'E/S de l'hôte ne correspond pas à une entrée de liste active, déterminer (1316) si la liste inactive est vide ;
en réponse à la détermination que la liste inactive n'est pas vide, convertir (1328) une entrée de liste inactive en une nouvelle entrée de liste active, et configurer (1332) ladite nouvelle entrée de liste active ;
**caractérisée**, en réponse à la détermination que la liste inactive est vide, par le recyclage (1320) d'une ou plusieurs ressources de flux périmées de la liste active à la liste inactive.

2. Méthode selon la revendication 1, la détermination si la demande d'E/S hôte correspond à une entrée de liste active (1312) comprenant ce qui suit :
déterminer (1404) si la liste active est vide, la demande d'E/S hôte ne correspondant pas à une entrée de liste active si la liste active est vide (1412) ;
en réponse à l'identification que la liste active n'est pas vide, rechercher (1408) les entrées de la liste active en commençant par la tête de la liste active et en identifiant (1416, 1420) si une entrée de liste active est comprise dans une fenêtre de flux correspondant à la liste active, la demande d'E/S hôte correspondant à une entrée de liste active si l'entrée de liste active est comprise dans la fenêtre de flux (1424) et ne correspond pas à une entrée de liste active si l'entrée de liste active n'est pas comprise dans la fenêtre de flux (1432) ; et
répéter la recherche (1408) et l'identification (1416, 1420) jusqu'à ce que soit une entrée de liste active comprise dans la fenêtre de flux soit identifiée, soit la liste active entière est consultée sans que ne soit identifiée une entrée de liste active au sein de la fenêtre de flux ;
la fenêtre de flux (508a) comprenant une plage LBA entre la limite LBA supérieure de fenêtre de flux (928) et une limite LBA inférieure de la fenêtre de flux (932).

3. Méthode selon la revendication 2, la mise à jour d'une entrée de liste active existante de la liste active correspondant au flux actif comprenant :
l'enlèvement (1336) de l'entrée de liste active correspondant à la demande d'E/S hôte de la liste active ;
la mise à jour (1344) de l'heure de la dernière consultation (tₗₕ) correspondant à ladite entrée de liste active, l'heure de la dernière consultation comprenant un marqueur temporel identifiant quant la demande d'E/S hôte a été reçue par le contrôleur de stockage (108) ;
l'ajustement (1344) d'une fenêtre de déplacement (512) correspondant à ladite entrée de liste active, la fenêtre de déplacement (512) étant utilisée pour déterminer si la limite LBA supérieure de la fenêtre de flux (928) et la limite LBA inférieure de la fenêtre de flux (932) doivent être modifiées ; et
le placement (1348) de ladite entrée de liste active à la tête de la liste active.

4. Méthode selon la revendication 3, la fenêtre de déplacement (512) comprenant une plage LBA entre une limite LBA supérieure de la fenêtre de déplacement (936) et une limite LBA inférieure de la fenêtre de déplacement (940), dans laquelle si la LBA de départ de la demande d'E/S hôte n'est pas comprise dans la fenêtre de déplacement, la méthode comprend en outre :
l'ajustement (1720) des limites LBA supérieure et inférieure de la fenêtre de déplacement à l'aide d'un modificateur séquentiel de la fenêtre du flux si la LBA de départ de la demande d'E/S hôte est directement adjacente à la demande d'E/S immédiatement précédente au même flux que la demande d'E/S hôte ; et l'ajustement (1724) des limites LBA supérieure et inférieure de la fenêtre de déplacement à l'aide d'un modificateur semi-séquentiel de la fenêtre du flux si la LBA de départ de la demande d'E/S hôte n'est pas directement adjacente à la demande d'E/S immédiatement précédente au même flux que la demande d'E/S hôte.

5. Méthode selon la revendication 3, la conversion (1328) d'une entrée de liste inactive en une nouvelle entrée de liste active comprenant l'enlèvement d'une entrée de liste inactive de la liste inactive.

6. Méthode selon la revendication 5, le recyclage d'une ou plusieurs ressources de flux périmées de la liste active à la liste inactive comprenant :
la recherche (1504, 1540, 1574), parmi les listes d'entrée actives, en commençant par la queue de listes actives, d'une entrée de liste active pour laquelle la différence entre une heure actuelle et l'heure de la dernière consultation (tₗₕ) est inférieure à un temps de recyclage du flux (944) ;
en réponse à la détermination (1508, 1544, 1576) du fait que la différence entre l'heure actuelle et l'heure de la dernière consultation (tₗₕ) d'une entrée de liste active n'est pas inférieure au temps de recyclage du flux (944), la sélection (1536, 1572, 1590) d'une entrée de liste active immédiatement plus récente dans la queue de listes actives, s'il y a plus d'entrées de liste active dans la liste active, et la répétition de la détermination (1508, 1544, 1576) si la différence entre l'heure actuelle et l'heure de la dernière consultation (tₗₕ) est inférieure au temps de recyclage du flux (944) ;
en réponse à la détermination (1508, 1544, 1576) si la différence entre l'heure actuelle et l'heure de la dernière consultation d'une entrée de liste active est inférieure au temps de recyclage du flux (944), l'enlèvement (1512, 1548, 1578) de ladite entrée de liste active de la liste active, la mise à zéro (1520, 1552, 1580) de l'heure de la dernière consultation et d'une fenêtre de flux (508a) pour ladite entrée de liste active, et le placement (1524, 1560, 1584) de ladite entrée de liste active sur la liste inactive.

7. Méthode selon la revendication 6, comprenant en outre :
le maintien d'un nombre d'E/S en suspens (960) pour chaque entrée de liste active ;
pour chaque entrée de liste active :
l'incrémentation (1108) du nombre d'E/S en suspens (960) correspondant à l'entrée de liste active lorsque le contrôleur de stockage reçoit une demande d'E/S hôte correspondant à l'entrée de liste active ;
la décrémentation (1208) du nombre d'E/S en suspens (960) correspondant à l'entrée de liste active en réponse à une demande d'E/S hôte correspondant à l'achèvement de l'entrée de liste active
le déclenchement (1216) d'une temporisation de rafale (340) correspondant à l'entrée de liste active lors du passage de un à zéro du nombre d'E/S en suspens (960) ; et
l'arrêt (1116) de la temporisation de rafale (340) lors du passage de un à zéro du nombre d'E/S en suspens (960) ; et
en réponse à l'arrêt de la temporisation de rafale (340), la mise en mémoire (1120) de la valeur de temporisation en rafale à une adresse de la queue depuis la dernière rafale identifiée par une heure depuis le dernier pointeur de rafale, et l'incrémentation (1124) du temps depuis le dernier pointeur de rafale afin d'identifier une heure suivante depuis l'adresse de la queue de la dernière rafale ;
le contrôleur de stockage (108) maintenant, pour chaque entrée de liste active, une queue de temps depuis la dernière rafale (948) et un pointeur de temps depuis la dernière rafale (952), les queues de temps depuis la dernière rafale étant des queues circulaires avec un nombre prédéterminé d'adresses.

8. Méthode selon la revendication 7, comprenant en outre ce qui suit :
déterminer (1128) quand une queue de temps depuis la dernière rafale est pleine, une queue de temps depuis la dernière rafale étant pleine si chacune du nombre prédéterminé d'adresses contient un temps non nul depuis l'entrée de la dernière rafale ;
si une queue de temps depuis la dernière rafale est pleine, calculer (1132) le temps de recyclage du flux (944) en fonction d'une moyenne des adresses des queues du temps depuis la dernière rafale et la sauvegarde du temps de recyclage du flux (944) à une adresse en mémoire du contrôleur de stockage.

9. Méthode selon la revendication 8, le temps de recyclage du flux (944) étant une moyenne pondérée comprenant l'application d'une pondération majeure à des valeurs plus récentes du temps depuis les valeurs de la dernière rafale et l'application d'une pondération mineure à des valeurs moins récentes du temps depuis la dernière rafale.

10. Contrôleur de stockage (108) permettant d'assurer le traitement efficace des demandes d'E/S, comprenant :
un processeur (312) ; et
une mémoire (316) couplée au processeur, la mémoire comprenant : une liste active (908) mémorisant une ou plusieurs entrées de liste active (908a-z) correspondant à une ou plusieurs ressources attribuées de flux de mémoire de contrôleur de stockage, comprenant une tête de liste active (916) à un bout de la liste active correspondant à une entrée de liste active la plus récemment utilisée et une queue de liste active (920) à un bout opposé de la liste active correspondant à une entrée de liste active la moins récemment utilisée ; et
une liste inactive (904) mémorisant une ou plusieurs entrées de liste inactive (904a-z) correspondant à une ou plusieurs ressources disponibles mais non attribuées de flux de mémoire ;
en réponse à la réception par le contrôleur de stockage d'une demande d'E/S d'hôte d'un ordinateur hôte, le contrôleur de stockage étant configuré pour effectuer une méthode selon une quelconque des revendications 1 à 9.

11. Système d'exécution d'un traitement efficace des demandes d'E/S, comprenant :
un ordinateur hôte (104) ; et
un contrôleur de stockage (108) selon la revendication 10, le contrôleur de stockage étant couplé à l'ordinateur hôte.
